# EUROPÄISCHE PATENTSCHRIFT

(11) **EP 4 277 771 B1**
(45) Veröffentlichungstag und Bekanntmachung des Hinweises auf die Patenterteilung: **13.08.2025**
(21) Anmeldenummer: 22700642.6
(22) Anmeldetag: 14.01.2022
(51) Int. Cl.: B26D 3/16, B23D 21/08

(54) **ROHRSCHNEIDEGERÄT**
DEVICE FOR CUTTING TUBES
DISPOSITIF POUR LA DÉCOUPE DE TUYAUX

(30) Priorität: 15.01.2021 DE 102021100767
(43) Veröffentlichungstag der Anmeldung: 22.11.2023
(73) Patentinhaber: Knipex-Werk C. Gustav Putsch KG, 42349 Wuppertal (DE)
(72) Erfinder: HEINSOHN, Andreas, 42369 Wuppertal (DE); HOLZ, Christian, 58239 Schwerte (DE)
(74) Vertreter: Müller, Enno
(86) Internationale Anmeldenummer: PCT/EP2022/050745
(87) Internationale Veröffentlichungsnummer: WO 2022/152845

(56) Entgegenhaltungen:
- DE-A1- 102018 124 817
- KR-A- 20000 055 279
- US-A- 3 022 575
- US-A- 3 237 301
- US-A1- 2010 154 223
- US-B1- 6 226 823
- US-B2- 9 308 660

## Beschreibung

### Gebiet der Technik

Die Erfindung ein Rohrschneidegerät mit einem Versetzungsteil und einem Gegenhalter, die an einem C-förmigen Arbeitskopf ausgebildet sind, wobei weiter der Arbeitskopf in ein auch als Griffbereich nutzbares Fußteil übergeht und das Versetzungsteil relativ zu dem Fußteil zur Veränderung einer Öffnungsweite des Arbeitskopfes versetzbar ist und das Versetzungsteil ein Schneidelement aufweist.

### Stand der Technik

Rohrschneidegeräte sind insbesondere aus der Sanitär-Installationstechnik und aus dem Rohrleitungsbau bekannt. Mit einem solchen Rohrschneidegerät kann in vorteilhafter Weise in kreisförmigem Schnitt mit mindestens einem, beispielsweise durch Drehung des Rohrschneidegerätes, umlaufenden Schneidmesser ein Rohrstück aus beispielsweise Flussstahl, V2A, Gusseisen, Messing oder auch aus einem thermoplastischen Kunststoff bevorzugt spanlos durchtrennt werden. Hierbei kann das aktive Schneidelement ein Schneidrad sein oder auch eine feststehende Schneidklinge bilden, wobei weiter das Schneidelement bevorzugt gehärtet ist, weiter beispielsweise aus einem Schnellarbeitsstahl, gegebenenfalls aus einem Hartmetall, besteht.

Beispielsweise ist ein solches Rohrschneidegerät bekannt aus der DE 10 2018 124 817 A1. Das dort gezeigte und beschriebene Rohrschneidegerät weist die Möglichkeit einer Grobeinstellung über ein Versetzungsteil auf, zur Grobverstellung der Öffnungsweite zwischen dem Schneidelement und dem Gegenhalter. Weiter zeigt beispielsweise die US 9 308 660 B2 ein Rohrschneidegerät bei welchem das Schneidelement in einem Verschiebeteil aufgenommen ist und über das Verschiebeteil das Schneidelement, beispielsweise zum Einführen des zu schneidenden Rohres in den Arbeitskopf, in eine Rückzugstellung verlagerbar ist.

Aus der gattungsgebenden US 2010/154 223 A1 ist ein Rohrschneidegerät bekannt, bei welchem das Versetzungsteil auf einer gerade verlaufenden Bahn versetzbar ist.

Im Weiteren ist noch auf einen Stand der Technik gemäß der KR 2000 0 055 279 A zu verweisen. Bei dem hieraus bekannten Rohrschneidegerät ist das Schneidelement in einer Halterung aufgenommen, in der auch eine Rolle aufgenommen ist. Bei einem aus der US 3 237 301 A bekannten Rohrschneidegerät ist das Versetzungsteil auf einer gerade verlaufenden Bahn, zur Schraubversetzung, ausgebildet. Aus der US 3 022 575 A ist ein Rohrschneidegerät bekannt, bei welchem das Versetzungsteil schrittweise auf einer gerade verlaufenden Bahn rastverstellbar ist.

### Zusammenfassung der Erfindung

Ausgehend von einem Stand der Technik gemäß der US 2010/154 223 A1 beschäftigt sich die Erfindung mit der Aufgabenstellung, ein vorteilhaft ausgebildetes Rohrschneidegerät anzugeben.

Diese Aufgabe ist beim Gegenstand des Anspruches 1 gelöst, wobei darauf abgestellt ist, dass das Versetzungsteil auf einer gekrümmt verlaufenden Bahn versetzbar ist.

Bevorzugt ist eine durch den Benutzer willensbetonte mögliche Versetzung des Versetzungsteils entlang einer beispielsweise Kreisbogenlinie mit weiter bevorzugt gleichbleibendem Radius gegeben, um über eine solche Versetzung die Anpassung der Schneidelementposition innerhalb der C-Öffnung des Arbeitskopfes an den Durchmesser des zu schneidenden Rohrteils vornehmen zu können. Über die gekrümmt verlaufende Bahn wird das Schneidelement in vorteilhafter Weise unabhängig von der Versetzungsstellung des Versetzungsteils, weiter bevorzugt unabhängig von dem Durchmesser des zu schneidenden Rohres, stets in eine günstige Schneidposition relativ zu dem zu schneidenden Rohr verbracht. Die gekrümmt verlaufende Bahn kann dabei, wie bevorzugt, über das Schneidelement hinaus im Wesentlichen in Richtung auf den der Öffnung des Arbeitskopfes gegenüberliegenden Kopfbereich gerichtet sein.

In dem Versetzungsteil kann ein Verschiebeteil mit dem Schneidelement bewegbar angeordnet sein.

In handhabungstechnisch vorteilhafter Weise ergibt sich die Möglichkeit einer Anpassung einer Schneidelement-Grundposition innerhalb der C-Öffnung des Arbeitskopfes in Abhängigkeit von dem Durchmesser des zu schneidenden Rohrstücks. Diese Anpassung erfolgt bevorzugt zufolge entsprechender Versetzung des Versetzungsteils, in welchem Versetzungsteil das Schneidelement mit dem Verschiebeteil bevorzugt bewegbar angeordnet ist. So ist zufolge dieser Ausgestaltung weiter das Schneidelement in jeder Versetzungsstellung des Versetzungsteils über das Verschiebeteil beispielsweise in eine Rückzugstellung oder aus dieser heraus in eine Schneidstellung verlagerbar. Dabei ist weiter bevorzugt insbesondere die Verlagerung des Schneidelements in die Rückzugstellung willensbetont durch den Benutzer herbeiführbar, beispielsweise zum Zwecke der Einführung des zu schneidenden Rohres in den Arbeitskopf.

Der Gegenhalter kann Rollen aufweisen, wobei jeweils zwei Rollen paarweise an einem Wippenteil angeordnet sind.

Hieraus ergibt sich eine günstige Ausrichtung der Rollen in dem Gegenhalter, angepasst insbesondere an den Durchmesser des in die C-Öffnung eingeführten und zu schneidenden Rohrteils. Zudem kann durch die bevorzugte Anordnung der Rollen an einem Wippenteil die Reibung zwischen Arbeitskopf und dem zu schneidenden Rohrteil im Zuge des Schneidvorgangs weiter reduziert werden. Die Rollenachsen, wie weiter bevorzugt auch eine parallel zu den Rollenachsen ausgerichtete geometrische Wippenachse des Wippenteils, erstrecken sich dabei bevorzugt in einer Richtung quer zu einer Verschieberichtung des das Schneidelement aufnehmenden Verschiebeteils. Das Verschiebeteil muss aber nicht notwendig bei einer Ausgestaltung des Rohrschneidegerätes, bei welchem jeweils zwei Rollen an einem Wippenteil vorgesehen sind, auch kombiniert vorgesehen sein, sondern ist in diesem Zusammenhang nur bevorzugt vorgesehen. In der Schneidstellung, d. h. bei in die C-Öffnung des Arbeitskopfes eingelegtem Rohrteil, kann eine Rolle oder können auch mehrere Rollen des Gegenhalters an der äußeren Umfangsfläche des zu schneidenden Rohres abstützend anliegen.

Die Rolle kann eine quer zu der Rollenachse umlaufende, die Rollenfläche unterbrechende Rille aufweisen.

Durch die Ausbildung einer solchen Rille ist eine schnelle, wiederholbare und präzise Positionierung an dem zu schneidenden Rohr erreichbar. Die Rille kann dabei als Positionierungshilfe dienen.

Darüber hinaus kann eine solche Rille auch im Zuge der Durchführung eines Schneidvorgangs von Vorteil, insbesondere bei einem Schneiden von Kunststoffrohren. Ein sich bei einem solchen Schneidvorgang gegebenenfalls einstellender Schneidspan kann in der rillenartigen Vertiefung der Rolle aufgenommen werden. Die Abstützung des Schneidguts an der Rollenfläche ist durch einen solchen Span daher nicht beeinträchtigt.

Ein Versetzungselement des Versetzungsteils kann in dem Griffbereich versenkt angeordnet sein.

Über das Versetzungselement ist eine Anpassung der SchneidelementPosition innerhalb der C-Öffnung des Arbeitskopfes an den Durchmesser des zu schneidenden Rohres ermöglicht. Eine solche Versetzung des Versetzungselements ist bevorzugt nur willensbetont durch den Benutzer möglich, bevorzugt durch gezielte Betätigung eines entsprechenden Versetzungselementes. Ein solches Versetzungselement kann beispielsweise ein Hebel sein, über welchen beispielsweise eine Festsetzungsstellung des Versetzungsteils einnehmbar beziehungsweise aufhebbar ist. Um bei der weiteren Betätigung des Rohrschneidegerätes im Zuge des Schneidvorganges nicht versehentlich die Festsetzungsstellung des Versetzungsteils aufzuheben, ist das diesbezügliche Versetzungselement gegenüber der sonstigen Bedienungs- beziehungsweise Greiffläche des Rohrschneidegerätes, beispielsweise im Bereich des Fußteils beziehungsweise des Griffbereichs, versenkt angeordnet. Bevorzugt ragt dieses Versetzungselement in keiner Stellung, zumindest nicht in der ein Schneiden eines Rohres ermöglichenden Stellung, über die das Versetzungselement umgebende Griffbereichsfläche hinaus. So kann das Versetzungselement beispielsweise in einer im Querschnitt dreiseitig geschlossenen Gehäusetasche einsitzen. Hierdurch ist auch vorteilhaft ermöglicht, dass ein Benutzer, beispielsweise zum Drehen des Rohrschneidegerätes um ein zu schneidendes Rohr, den Griffbereich umgreifen kann ohne hierdurch zugleich das Versetzungselement zu betätigen. Zur Betätigung des Versetzungselementes muss er vielmehr gesondert in den Griffbereich eingreifen.

Das Verschiebeteil mit dem Schneidelement kann in dem Versetzungsteil bewegbar angeordnet sein, wobei das Versetzungsteil auf der gekrümmt verlaufenden Bahn versetzbar ist, wobei weiter gegebenenfalls der Gegenhalter Rollen aufweist und zwei Rollen paarweise an einem Wippenteil angeordnet sein können und darüber hinaus gegebenenfalls ein Versetzungselement des Versetzungsteils in dem Griffbereich versenkt angeordnet sein kann.

Gemäß einer weiter bevorzugten Ausgestaltung kann das Verschiebeteil mit dem Schneidelement in dem Versetzungsteil gegen Federkraft bewegbar angeordnet sein. Die Federkraft wirkt dabei bevorzugt in Richtung auf die Funktionsstellung des Schneidelementes, d. h. in eine etwa in Richtung auf die Mitte der C-Öffnung des Arbeitskopfes gerichtete Ausfahrstellung des Schneidelements, sodass das Schneidelement nach Aufhebung einer entsprechenden Belastung des das Schneidelement aufnehmenden Verschiebeteils bevorzugt selbsttätig in diese Funktionsstellung vorfährt. Eine diesbezüglich angeordnete Feder kann beispielsweise eine übliche Zylinderfeder sein, die, wie auch weiter bevorzugt, einerends sich an dem Versetzungsteil abstützt und anderenends gegen das Verschiebeteil wirkt.

Darüber hinaus kann auch vorgesehen sein, dass in dem Gegenhalter zwei Paare von Rollen vorgesehen sind. Jedes Paar kann dabei, wie weiter auch bevorzugt, jeweils an einem Wippenteil angeordnet sein. Die Rollen beziehungsweise die Paare von Rollen sowie deren Wippenteile können dabei in dem Gegenhalter im Wesentlichen entlang der durch die C-Öffnung gegebenen Begrenzungswand der Öffnung angeordnet sein. Die geometrischen Rollenachsen, wie bevorzugt auch die geometrischen Wippenachsen sind gleichgerichtet ausgerichtet. Die geometrischen Wippenachsen sind umfangsversetzt in dem C-förmigen Arbeitskopf angeordnet. Ein Umfangs-Versetzungswinkel kann beispielsweise zwischen 60 Grad und 150 Grad, beispielsweise etwa 90 Grad betragen.

Bei einer möglichen Ausbildung des Schneidelements als Schneidrad, sind weiter bevorzugt die geometrischen Rollenachsen, wie auch die geometrischen Wippenachsen parallel zur Radachse des Schneidelementes ausgerichtet.

Auch kann das Versetzungselement zusammen mit dem Versetzungsteil verfahrbar angeordnet sein. Entsprechend ergibt sich nach einer Versetzung des Versetzungsteils zur Anpassung der Schneidelement-Positionierung an den Durchmesser des zu schneidenden Rohres zugleich auch eine entsprechende Versetzung des auf das Versetzungsteil einwirkenden Versetzungselements. So kann gegebenenfalls allein oder zusätzlich auch über die Position des Versetzungsteils, beispielsweise relativ zu dem Fußteil des Rohrschneidegerätes, die eingestellte Versetzungsstellung beziehungsweise Schneidelement-Position angezeigt sein.

Das Versetzungselement kann gemäß einer bevorzugten Ausgestaltung in zwei oder mehr, beispielsweise bis hin zu fünf oder zehn, weiter bevorzugt in beispielsweise drei Versetzungsstellungen relativ zu dem Fußteil des Rohrschneidegerätes, aber auch relativ zu dem Arbeitskopf desselben festgelegt werden. Es kann sich eine entsprechende Anzahl von Raststellungen für das Versetzungselement ergeben.

Die Verstellung des Versetzungselements ist dabei weiter bevorzugt unabhängig von der Verschiebung des Verschiebeteils mit dem Schneidelement.

So kann weiter ein Einzugshebel vorgesehen sein, mit welchem das Schneidelement aus der C-Öffnung herausbewegbar ist. Über den Einzugshebel wird bevorzugt mittelbar oder unmittelbar auf das Verschiebeteil eingewirkt, wobei bei willensbetonter Betätigung des Einzugshebels durch den Benutzer das Verschiebeteil mit dem Schneidelement bevorzugt entgegen Federkraft verlagert wird.

Der Einzugshebel kann gemäß einer bevorzugten Ausgestaltung bezüglich des Fußteils des Rohrschneidegerätes im Wesentlichen gegenüberliegend angeordnet sein zu dem auf das Versetzungsteil einwirkenden Versetzungselement.

Mit Versetzen des Versetzungsteils wird bevorzugt auch das das Schneidelement tragende Verschiebeteil mit versetzt. Dabei kann weiter auch der auf das Verschiebeteil einwirkende Einzugshebel zusammen mit dem Versetzungsteil verfahrbar angeordnet sein.

An dem Verschiebeteil kann gemäß einer weiter bevorzugten Ausgestaltung eine Betätigungsfläche ausgebildet sein, die durch den Einzugshebel beaufschlagbar ist. Zufolge entsprechender Beaufschlagung dieser Betätigungsfläche über den Einzugshebel ist eine Verlagerung des Verschiebeteils zusammen mit dem Schneidelement relativ zu dem Versetzungsteil, bevorzugt entgegen der Kraft der Rückstellfeder, herbeiführbar. Der Einzugshebel und die Betätigungsfläche sind zur steuernden Zusammenwirkung ausgebildet, sodass beispielsweise eine durch den Benutzer willensbetont herbeigeführte Schwenkverlagerung des Einzugshebels eine im Wesentlichen lineare Verlagerung des Verschiebeteils in eine Schneidelement-Rückzugsstellung bewirkt.

So kann weiter die Betätigungsfläche beispielsweise als Steuernocken wirken, der mit Entspannung der Feder das Verschiebeteil mit dem Schneidelement in eine Ausgangsstellung zurückbewegt. Die Betätigungsfläche des Steuernockens kann dabei weiter zur Zusammenwirkung mit dem Einzugshebel in einer Richtung quer zur Verlagerungsrichtung des Verschiebeteils beispielsweise bogenförmig verlaufen.

Die Ausgangsstellung des Verschiebeteils mit dem Schneidelement ist bevorzugt die anschlagbegrenzte Stellung in Entspannungsrichtung der auf das Verschiebeteil wirkenden Feder.

In bevorzugter Ausgestaltung ist das Verschiebeteil in Verstellrichtung des Versetzungsteils gekrümmt verlaufend gestaltet. Zufolge dieser Ausgestaltung kann das Verschiebeteil zusammen mit dem Schneidelement in dem Versetzungsteil entsprechend der Krümmungslinie, an welcher entlang das Versetzungsteil versetzbar ist, in die Rückzugstellung des Schneidelements beziehungsweise in die Ausgangsstellung verlagert werden. Dabei ragt das Schneidelement in der Ausgangsstellung, gegebenenfalls mit einen Teilabschnitt des Verschiebeteils, in Richtung der Krümmungslinie stirnseitig über das Versetzungsteil hinaus. Es kann sich weiter entsprechend eine mögliche Verlagerung des Schneidelements relativ zu dem Versetzungsteil ebenfalls entlang der Krümmungslinie ergeben.

Der Einzugshebel kann bei Betätigung mit zwei zueinander distanzierten Hebelschenkeln auf jeweils eine Betätigungsfläche des Verschiebeteils einwirken. Die Distanzierung der Hebelschenkel zueinander ist bevorzugt in Richtung einer geometrischen Achse gegeben, um welche der Einzugshebel bei Betätigung bevorzugt schwenkbar ist. Dabei kann der Einzugshebel weiter bevorzugt an dem Versetzungsteil anscharniert sein. Die Scharnierachse kann durch einen gesondert vorgesehenen Achskörper gegeben sein, welcher an dem Versetzungsteil seine Abstützung findet.

In einer Weiterbildung der Erfindung kann in vorteilhafter Weise zumindest ein Hebelschenkel einen Schlitz des Versetzungsteils durchsetzen. Bevorzugt durchsetzt jeder Hebelschenkel einen gesondert ausgebildeten Schlitz in dem Versetzungsteil. Es kann sich hierdurch zufolge Zusammenwirkung von Hebelschenkel und Schlitz, wie bevorzugt, eine vorteilhafte (seitliche) Führung für den Einzugshebel ergeben.

Als weiter vorteilhaft erweist sich eine Ausgestaltung, bei welcher das Schneidelement durch eine Steckachse gehaltert ist, die lediglich durch Druckausübung in Achsrichtung der Steckachse entfernbar ist. Es ergibt sich so ein Schnellwechselsystem für das Schneidelement.

Bevorzugt kann ein solcher Schneidelementwechsel nur in der vorbeschriebenen Ausgangsstellung des Schneidelements vorgenommen werden, in welcher Ausgangsstellung das Schneidelement in der C-Öffnung des Arbeitskopfes freiliegt. Eine gegebenenfalls bohrungsartige Öffnung in dem Schneidelement kann nach Aufhebung der Halterung durch die Steckachse zur verbesserten Entnahme des Schneidelements dienen, indem beispielsweise durch diese Öffnung ein Werkzeug zur Entnahme geführt wird.

Das Werkzeug zur Entnahme des Schneidelements aus der Aufnahme kann in vorteilhafter Weise die zur Entnahme des Schneidelements zuvor entfernte Steckachse sein, insbesondere ein Abschnitt der Steckachse. So kann weiter ein freies, beispielsweise ein dem Handhabenende abgewandtes Ende der Steckachse zum Ein- oder Durchstecken in beziehungsweise durch die Öffnung des Schneidelements ausgebildet sein. Weiter beispielsweise kann dieses Ende zapfenartig ausgebildet sein. Entsprechend ist bei einer solchen Ausbildung das Schneidelement-Entnahmewerkzeug Teil des Rohrschneidegeräts. Zudem ist dabei sichergestellt, dass vor einem Ansetzen der Steckachse als Werkzeug, diese Steckachse zuvor, wie auch zur Entnahme des Schneidelements nötig, entfernt ist.

Auch ist bevorzugt das Schneidelement mit zwei in Richtung der vorbeschriebenen Krümmungslinie gegenüberliegenden Schneidbereichen versehen, welche Schneidbereiche gleich ausgebildet sein können, alternativ aber auch zur Anpassung beispielsweise an das Material des zu schneidenden Rohres unterschiedliche Schneidgeometrien aufweisen können. So kann das Schneidelement in dem Verschiebeteil beispielsweise um 180 Grad versetzbar aufgenommen sein.

Das Schneidelement kann weiter aus einem hochwertigen Kugellagerstahl gefertigt sein.

Die Rollen des Gegenhalters können gemäß einer weiter bevorzugten Ausgestaltung in Richtung ihrer Achserstreckung etwa mittig eine umlaufende rillenartige Vertiefung aufweisen. Diese rillenartigen Vertiefungen aller Rollen erstrecken sich bevorzugt in einer Ebene, die weiter bevorzugt zusammen mit dem in die C-Öffnung eintauchenden Schneidelement eine gemeinsame Schneidebene definieren können. Auch ist durch diese Ausgestaltung eine schnelle, wiederholbare und präzise Positionierung an dem zu schneidenden Rohr durch die auch als Positionierungshilfen vorgesehenen rillenartigen Vertiefungen an den Rollen gegeben. Ein Nutzer des Rohrschneidegerätes kann sich vorteilhaft optisch hinsichtlich der Schnittebene an einer rillenartigen Vertiefung orientieren auch wenn das Schneidelement durch ein eingelegtes Rohr bereits überdeckt ist.

Bezogen auf die Erstreckungsrichtung der Rollenachse kann die Rille in der Rollenfläche eine Rillenbreite aufweist, die einem Achtel bis einem Sechstel, mindestens aber einem Zwölftel, bevorzugt auch bis hin zu einem Drittel eines Quererstreckungsmaßes (Durchmesser) der Rolle entsprechen kann.

Weiter kann die Rille eine diesbezügliche Breite aufweisen, die einem Sechszehntel bis einem Zwölftel, mindestens aber einem Vierundzwanzigstel der in Achsrichtung betrachteten Rollenlänge entsprechen kann.

Auch kann die Breite einem 1,4-Fachen oder mehr, bis hin zu beispielsweise einem 2-Fachen oder mehr, der senkrecht hierzu betrachteten Rillentiefe entsprechen, wobei die Rillentiefe weiter beispielsweise einem Vierundzwanzigstel bis hin zu einem Fünftel, bevorzugt etwa einem Zwölftel des Rollendurchmessers entsprechen kann.

Ein Absolutmaß für eine Rillenbreite kann beispielsweise 1 bis 2 mm, oder auch mehr, betragen.

In einer möglichen Ausgestaltung kann die Rille bezogen auf die Erstreckung der Rolle in Achsrichtung außermittig angeordnet sein. Bevorzugt ist diesbezüglich aber eine mittige Positionierung.

So kann weiter die Rille, wie auch bevorzugt, zusammen mit der Schneidspitze des Schneidelements in einer gemeinsamen Schneidebene angeordnet sein. Ein Nutzer des Rohrschneidegerätes kann sich so vorteilhaft optisch hinsichtlich der Schnittebene an der rillenartigen Vertiefung orientieren, auch in dem Fall, dass das Schneidelement durch ein eingelegtes Rohr bereits überdeckt ist.

In einer weiter möglichen Ausgestaltung kann die Rolle in Achsrichtung betrachtet zweiteilig ausgebildet sein, aufweisend ein erstes Rollenteil 18' und ein zweites Rollenteil. Beide Rollenteile können gleiche axiale Längen aufweisen. Aber auch Rollenteile mit unterschiedlichen Längen sind diesbezüglich möglich. Hinsichtlich der Durchmesser ist bevorzugt, dass diese gleich gewählt sind.

Die beiden Rollenteile ergänzen sich im Nutzungszustand zu der Rolle, können dabei lose auf einer Rollenwelle gelagert und gehalten sein.

Gegebenenfalls sind die Rollenteile bezogen auf der Rollenwelle lagernd aufeinander zu belastet, beispielsweise durch Federkraft, so dass die Rollenteile mit ihren zugewandten Stirnflächen bevorzugt aneinander liegen.

An einer oder beiden aufeinander zu gerichteten Stirnflächen kann eine Schrägfläche ausgebildet sein, zur Bildung der Rille zwischen den Rollenteilen.

Durch die Zweiteiligkeit der Rolle können bei einem entsprechend vorgesehen Achsspiel die Rollenteile beispielsweise zur Entfernung eines sich im Bereich der Rille festgesetzten Spans die Rollenteile derart um wenige Zehntel Millimeter voneinander weg bewegt werden, dass durch die sich dabei einstellende Verbreiterung der Rille ein günstiges Entfernen des Spans aus der Rille ermöglicht wird.

Auch können durch diese Zweiteiligkeit der Rolle die Rollenteile bei Bedarf so auf die Rollenwelle aufgesetzt werden, dass die mit der Schrägfläche versehenen Stirnflächen nach außen weisen und sich somit entsprechend mittig zwischen den Rollenteilen keine Rille ergibt, sondern vielmehr eine durchgehende Rollenmantelfläche mit gleichbleibendem Durchmesser.

Das Rohrschneidegerät kann mit mehreren Rollen versehen sein, wobei nur eine oder mehrere bis hin zu, wie auch bevorzugt, alle Rollen mit einer Rille versehen sein können. Bei mehreren mit einer Rille versehenen Rollen sind die Rillen weiter bevorzugt bezogen auf eine Schneidebene, wobei sie hierzu auch parallel versetzt in einer gesonderten Rillenebene angeordnet sein können, fluchtend zueinander in einer selben Ebene angeordnet.

### Kurze Beschreibung der Zeichnungen

Nachstehend ist die Erfindung anhand der beigefügten Zeichnung, die lediglich Ausführungsbeispiele darstellt, näher erläutert. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Es zeigt:
- Fig. 1: ein Rohrschneidegerät in perspektivischer Darstellung, betreffend eine erste Ausführungsform;
- Fig. 2: das Rohrschneidegerät in Seitenansicht;
- Fig. 3: das Rohrschneidegerät in Stirnansicht;
- Fig. 4: das Rohrschneidegerät in Rückansicht;
- Fig. 5: das Rohrschneidegerät in einer explosionsperspektivischen Darstellung;
- Fig. 6: den Schnitt gemäß der Linie VI-VI in Figur 4;
- Fig. 7: den Schnitt gemäß der Linie VII-VII in Figur 3;
- Fig. 8: den Schnitt gemäß der Linie VIII-VIII in Figur 6;
- Fig. 9: die Herausvergrößerung des Bereichs IX in Figur 6;
- Fig. 10: den Schnitt gemäß der Linie X-X in Figur 7;
- Fig. 11: eine Darstellung gemäß Figur 6, jedoch betreffend eine Einfahrstellung eines Schneidelements des Rohrschneidegerätes;
- Fig. 12: die Herausvergrößerung des Bereichs XII in Figur 11;
- Fig. 13: eine Darstellung gemäß Figur 7, jedoch betreffend die Stellung gemäß Figur 11;
- Fig. 14: eine der Figur 7 entsprechende Darstellung, eine Entnahmestellung für das Schneidelement betreffend;
- Fig. 15: den Schnitt gemäß der Linie XV-XV in Figur 14;
- Fig. 16: das Rohrschneidegerät in einer Schnittdarstellung gemäß Figur 13, betreffend eine Rohransetzstellung bei einer eingestellten ersten Rohrschneidgröße und bei in eine Rückzugsstellung verlagertem Schneidelement;
- Fig. 17: eine der Figur 16 entsprechende Darstellung, jedoch nach Verlagerung des zu schneidenden Rohres in die Schneidposition und bei Anlage des Schneidelements an dem Rohr;
- Fig. 18: eine der Figur 17 entsprechende Darstellung, betreffend die Schneidstellung des Schneidelements;
- Fig. 19: eine der Figur 16 entsprechende Darstellung, jedoch betreffend eine eingestellte zweite Rohrschneidgröße bei Anordnung eines Rohres entsprechender Größe;
- Fig. 20: eine der Figur 19 entsprechende Darstellung, jedoch nach Verlagerung des zu schneidenden Rohres in die Schneidposition und bei Anlage des Schneidelements an dem Rohr;
- Fig. 21: eine der Figur 20 entsprechende Darstellung, betreffend die Schneidstellung des Schneidelements;
- Fig. 22: eine weitere der Figur 16 entsprechende Darstellung, jedoch betreffend eine eingestellte dritte Rohrschneidgröße bei Anordnung eines Rohres entsprechender Größe;
- Fig. 23: eine der Figur 22 entsprechende Darstellung, jedoch nach Verlagerung des zu schneidenden Rohres in die Schneidposition und bei Anlage des Schneidelements an dem Rohr;
- Fig. 24: eine der Figur 23 entsprechende Darstellung, betreffend die Schneidstellung des Schneidelements;
- Fig. 25: das Rohrschneidegerät in einer Seitenansicht gemäß Figur 2, betreffend eine zweite Ausführungsform;
- Fig. 26: eine dritte Ausführungsform des Rohrschneidegerätes in einer Darstellung gemäß Figur 2;
- Fig. 27: das Rohrschneidegerät in einer perspektivischen Ausschnittdarstellung, eine weitere Ausführungsform betreffend;
- Fig. 28: das Rohrschneidegerät gemäß Figur 27 in Stirnansicht;
- Fig. 29: die stark vergrößerte Schnittdarstellung der Bereiche XXIX in Figur 28;
- Fig. 30: eine der Figur 29 entsprechende Schnittdarstellung, eine weitere Ausführungsform betreffend.

### Beschreibung der Ausführungsformen

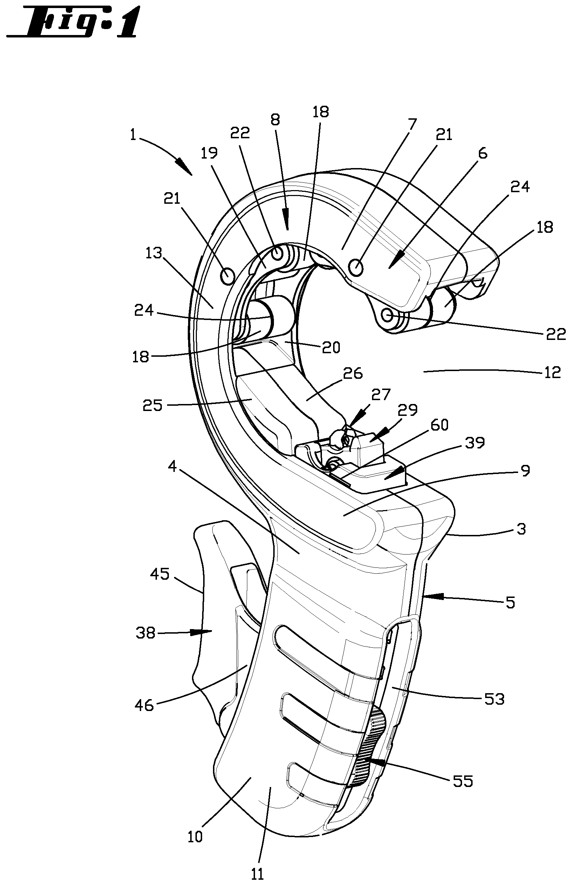

Dargestellt und beschrieben ist, zunächst mit Bezug zu Figur 1, ein Rohrschneidegerät 1 zum Zuschneiden von Rohrstücken 2.

Das Rohrschneidegerät 1 besitzt zunächst und im Wesentlichen ein aus einer ersten Gehäuseschale 3 und einer zweiten Gehäuseschale 4 bestehendes Gehäuse 5. Die Gehäuseschalen 3 und 4 können gemäß einer bevorzugten Ausführungsform aus einem Hartkunststoffmaterial bestehen, weiter beispielsweise aus einem glasfaserverstärkten Polyamid.

Das Gehäuse 5 formt einen im Wesentlichen C-förmigen Arbeitskopf 6, dessen einer C-Schenkel 7 einen Gegenhalter 8 bildet und der andere C-Schenkel 9 in ein im Wesentlichen quergerichtet zu der C-Öffnung 12 des Arbeitskopfes 6 verlaufendes Fußteil 10 übergeht. Das Fußteil 10 kann, wie auch bevorzugt, als Griffbereich 11 nutzbar sein.

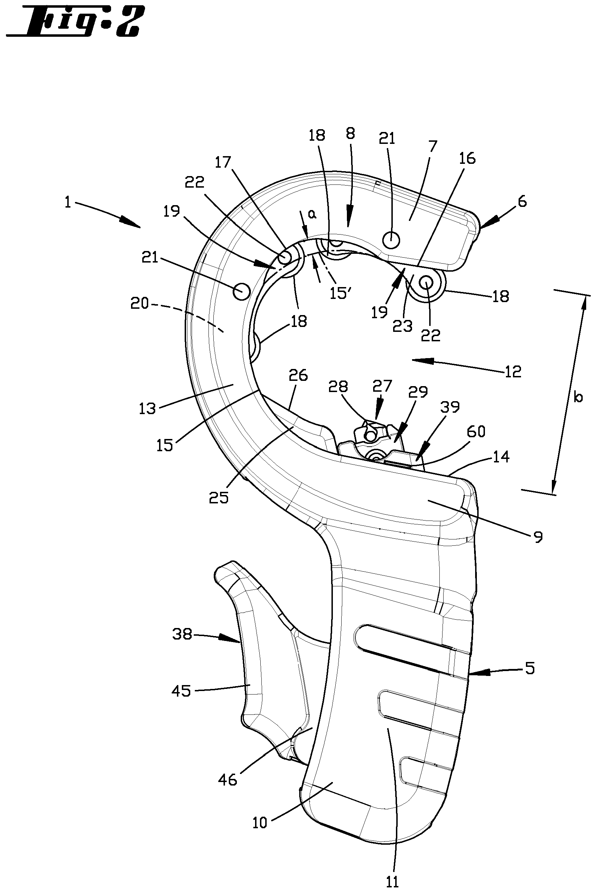

Der die C-Schenkel 7 und 9 verbindende C-Steg 13 ist mit Bezug auf eine Grundrissdarstellung der C-Öffnung 12, beispielsweise gemäß Figur 2, entlang einer über etwa 180° sich erstreckenden Bogenlinie folgend geformt. So kann, weiter beispielsweise gemäß der Darstellung in Figur 2, die die C-Öffnung 12 begrenzende und bevorzugt im Wesentlichen geradlinig gestreckt verlaufende Schenkelwandung 14 des C-Schenkels 9 im Wesentlichen tangential übergehen in einen ersten, etwa über 90 bis 100 Grad erstreckenden Stegwandungs-Abschnitt 15 des C-Stegs 13, welcher bezüglich der Begrenzung der C-Öffnung 12 über die gesamte Erstreckung etwa durch einen gleichbleibenden oder annähernd gleichbleibenden Radius beschrieben ist.

Der den Gegenhalter 8 bildende C-Schenkel 7 weist eine die C-Öffnung 12 begrenzende Schenkelwandung 16 auf, die weiter bevorzugt bei geradliniger Ausrichtung zumindest annähernd parallel ausgerichtet ist zu der Schenkelwandung 14 des gegenüberliegenden C-Schenkels 9.

Der erste, kreisbogenförmige Stegwandungs-Abschnitt 15 ist über einen zweiten bogenförmigen Stegwandungs-Abschnitt 17 mit der vorbeschriebenen Schenkelwandung 16 verbunden. Wie beispielsweise aus der Darstellung in Figur 2 zur erkennen, tritt dieser zweite Stegwandungs-Abschnitt 17 gegenüber einer gedachten, in Figur 2 in strichpunktierter Linienart wiedergegebenen und etwa tangential in die Schenkelwandung 16 einlaufenden gedachten Verlängerung 15' des Stegwandungs-Abschnitts 15 zurück, sodass durch die gewählte Ausbildung des zweiten Stegwandungs-Abschnitts 17 eine Vergrößerung der Fläche der C-Öffnung 12 erreicht ist.

Über die Erstreckung des Stegwandungs-Abschnitts 17 können unterschiedliche Krümmungsradien gewählt sein, wobei ein erster, sich an den Stegwandungs-Abschnitt 15 anschließender Abschnitt einen kleineren Krümmungsradius aufweisen kann als ein abschließender, in die Schenkelwandung 16 übergehender Abschnitt.

Dabei kann sich weiter im Bereich des Stegwandungs-Abschnitts 17 ein gegenüber der gedachten Verlängerung 15' des Stegwandungs-Abschnitts 15 größtes Erweiterungsmaß a ergeben, welches beispielsweise etwa einem Zwölftel bis etwa einem Achtel, weiter etwa einem Zehntel des Abstandsmaßes b zwischen den Schenkelwandungen 14 und 16 entsprechen kann (vergleiche Figur 2).

In dem Arbeitskopf 6 sind zugeordnet dem Gegenhalter 8 Rollen 18 vorgesehen. Bevorzugt ist eine paarweise Anordnung von Rollen 18 vorgesehen, wobei weiter diese Rollen 18 in einem Wippenteil 19 gehaltert sein können.

Das Wippenteil 19 ist, bei Erstreckung des Wippenteils 19 in einer sich zur C-Öffnung 12 hin öffnenden Gehäusevertiefung 20, über eine Wippenachse 21 zwischen den Gehäuseschalen 3 und 4 schwenkbar gehaltert. Die geometrische Achse der Wippenachse 21 wie auch die geometrischen Achsen der Rollenachsen 22 sind quergerichtet zu einer Einführrichtung r eines Rohrstücks 2 in die C-Öffnung 12, sind weiter entsprechend gemäß einer Grundrissdarstellung der C-Öffnung 12, wie diese in Figur 2 dargestellt ist, punktartig wiedergegeben.

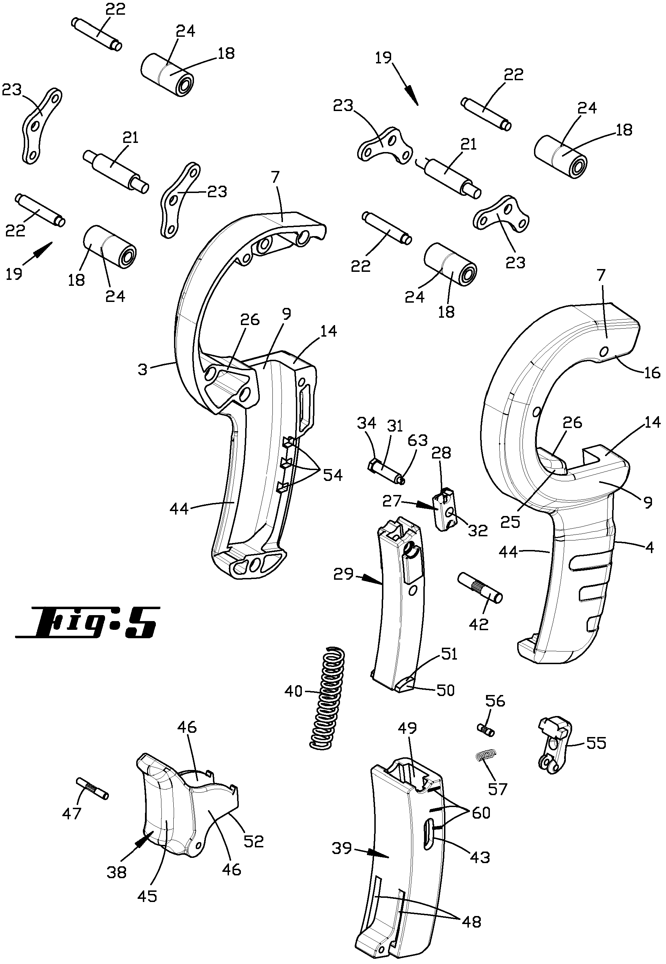

Wie weiter beispielsweise aus der Darstellung in Figur 5 zu erkennen, ist jedes Wippenteil 19 mit zwei bevorzugt gleich gestalteten und parallel zueinander ausgerichteten Laschen 23 versehen, mit von der Wippenachse 21 beidseitig abweisenden Laschenschenkeln, an deren Enden die Rollenachsen 22 gefasst sind. Die beiden Rollen 18 eines Wippenteils 19 erstrecken sich dabei bevorzugt zwischen den Laschen 23 und sind frei um deren Rollenachsen 22 drehbar.

In Erstreckungsrichtung der Rollenachse 22 betrachtet, ist jede Rolle 18 bevorzugt mittig mit einer gegenüber der ansonsten kreiszylindrischen Rollenfläche versenkten Rille 24 versehen.

In bevorzugter Ausgestaltung sind zwei Wippenteile 19 mit jeweils zwei Rollen 18 vorgesehen, wobei ein Wippenteil 19 im Wesentlichen dem C-Schenkel 7 des Gegenhalters 8 und das weitere Wippenteil 19 im Wesentlichen dem C-Steg 13 zugeordnet sind. So kann weiter die Wippenachse 21 des einen Wippenteils 19 etwa zugeordnet dem Übergangsbereich des zweiten Stegwandungs-Abschnitts 17 in die Schenkelwandung 16 angeordnet sein, während die Wippenachse 21 des anderen Wippenteils 19 im Wesentlichen etwa nahe dem Übergangsbereich des ersten Stegwandungs-Abschnitts 15 in den zweiten Stegwandungs-Abschnitt 17 angeordnet sein kann.

Zufolge der vorgesehenen Gehäusevertiefung 20 können die Wippenteile 19 mit den Rollen 18 partiell zufolge Schwenkverlagerung um die Wippenachse 21 in die Gehäusevertiefung 20 eintauchen, sodass mit Bezug auf eine Grundrissdarstellung gemäß Figur 2 eine Rolle 18 vollständig oder partiell hinter den zugeordneten Wandungsabschnitt der C-Öffnung 12 treten kann oder auch partiell oder vollständig über die zugeordnete Wandung in Richtung auf die C-Öffnung 12 vortreten kann.

Die Wippenteile 19 können, wie dargestellt, frei um deren Wippenachsen 21, bevorzugt allein begrenzt durch den Grund der Gehäusevertiefung 20, schwenkbar sein. Auch kann gemäß einer möglichen Ausführungsform vorgesehen sein, dass eine Feder, beispielsweise eine Schenkelfeder das jeweilige Wippenteil 19 in eine Grundstellung belastet, wie diese beispielsweise in Figur 2 dargestellt ist. Hierdurch kann das Einführen des zu schneidenden Rohrstücks 2 weiter erleichtert sein.

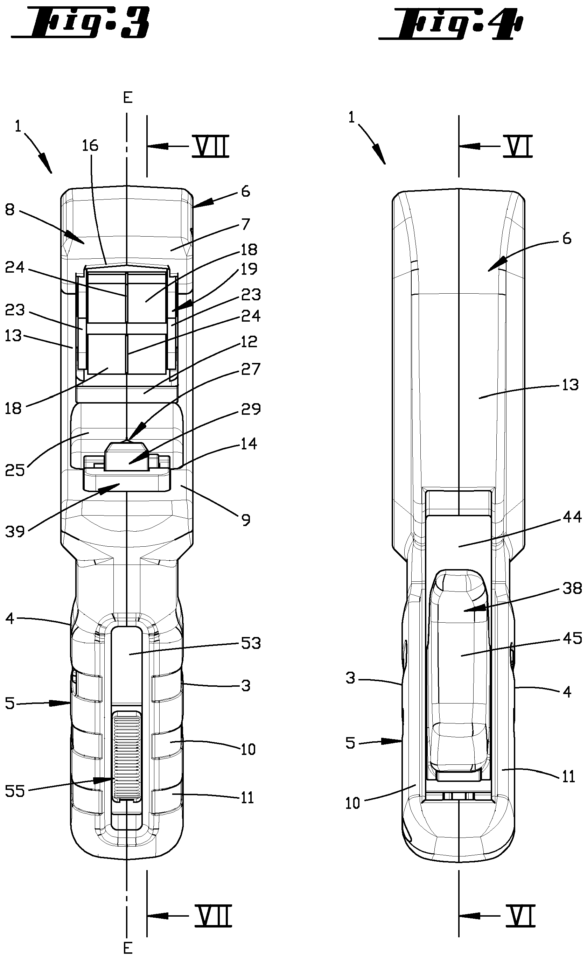

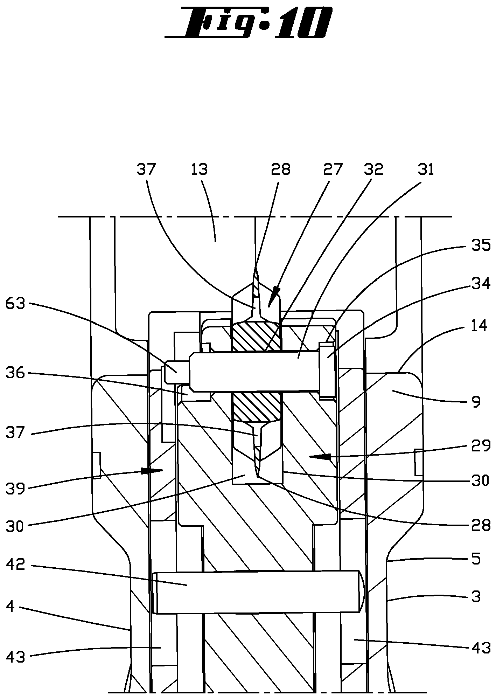

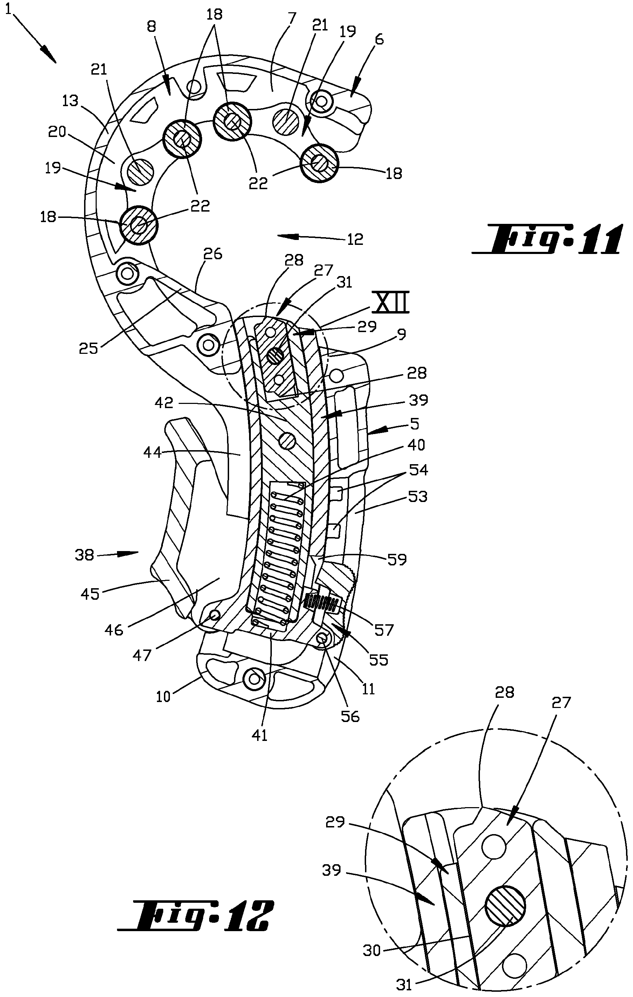

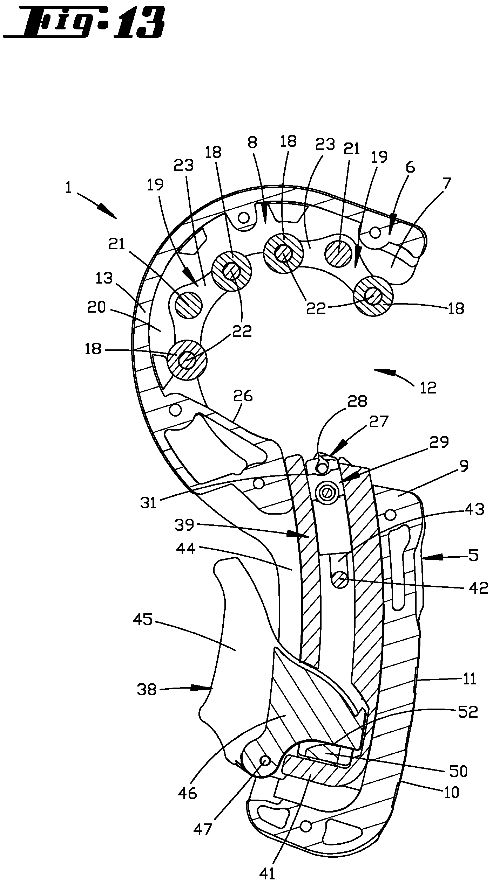

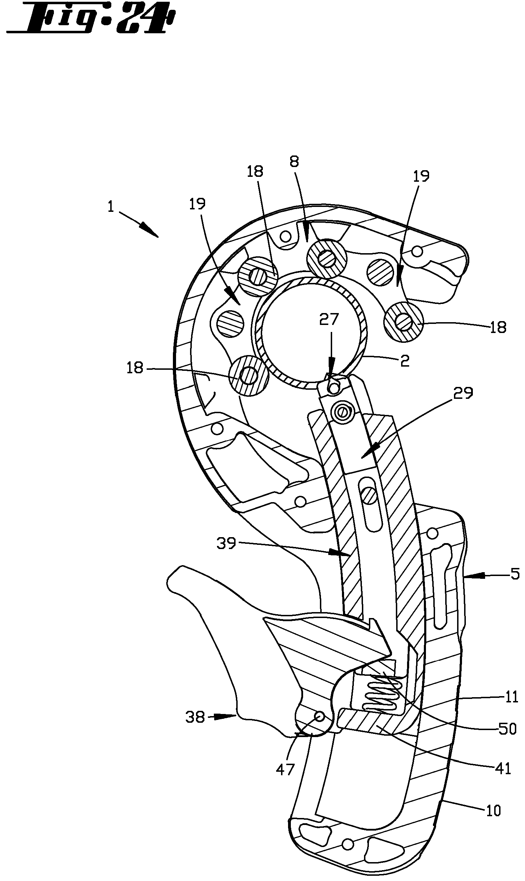

Darüber hinaus kann, wie anhand des in den Figuren 1 bis 24 dargestellten Ausführungsbeispiels gezeigt, beispielsweise im Übergangsbereich der fußteilseitigen Schenkelwandung 14 in den anschließenden Stegwandung-Abschnitt 15 ein in die C-Öffnung 12 vortretender Abstützbock 25 vorgesehen sein, mit einer zur C-Öffnung 12 hin gerichteten Abstützfläche 26.

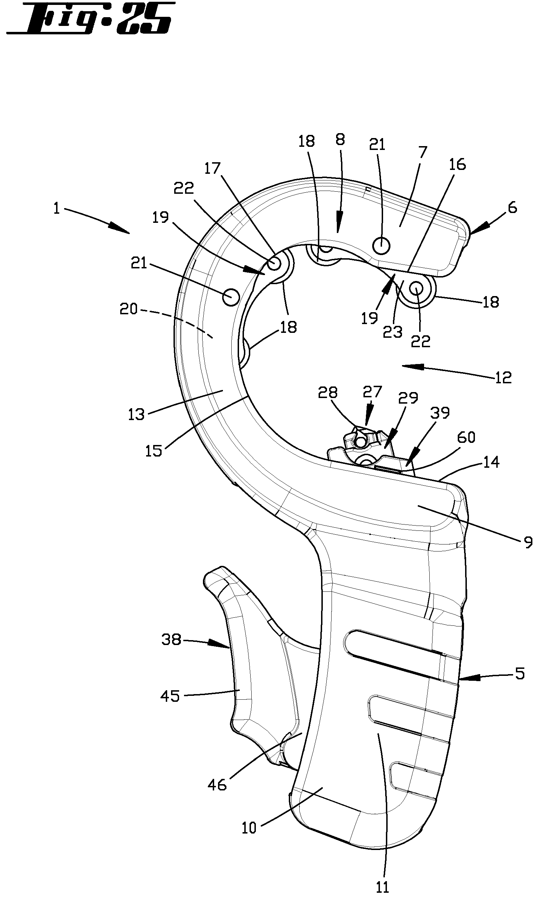

Alternativ kann die Begrenzungskontur der C-Öffnung 12 gemäß der in Figur 25 dargestellten zweiten Ausführungsform auch allein durch die Schenkelwandungen 14 und 16 sowie die Stegwandungs-Abschnitte 15 und 17, entsprechend unter Fortlassung eines vorbeschriebenen Abstützbocks 25, gegeben sein.

Zum Schneiden eines Rohrstückes 2 in Umfangsrichtung ist das Rohrschneidegerät 1 mit einem Schneidelement 27 versehen, welches beispielsweise gemäß Figur 2 in einer Ausgangsstellung, welche Ausgangsstellung der Schneid-Bereitschaftsstellung entspricht, frei in die C-Öffnung 12 einragt.

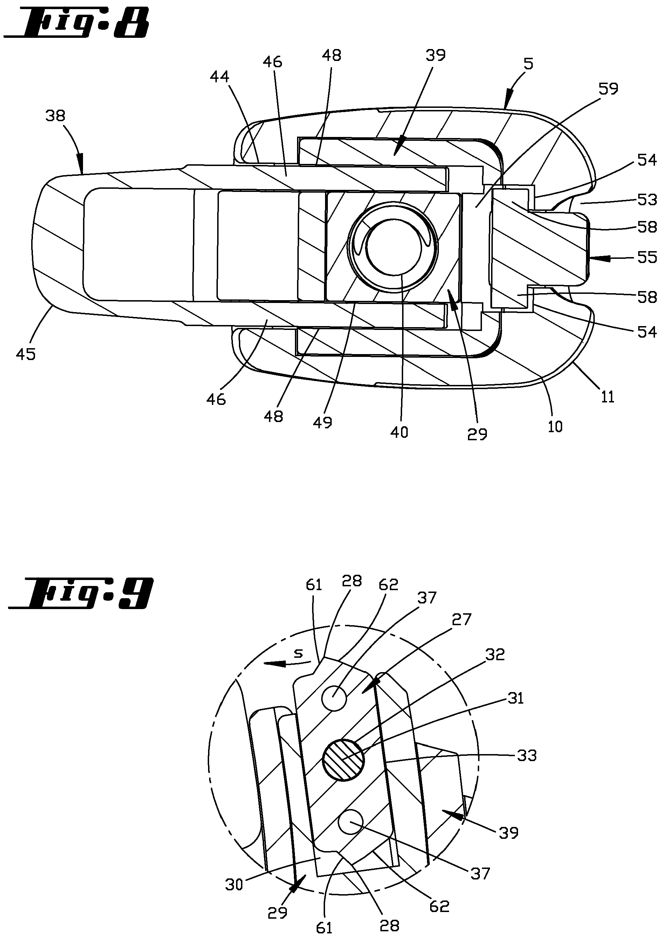

Wie beispielsweise aus der Darstellung in Figur 9 zu erkennen, ist das Schneidelement 27 im Wesentlichen als Schneidklinge gebildet, weiter bevorzugt als sogenannte Wechsel-Klinge, mit in Längsrichtung des Schneidelements 27 betrachtet gegenüberliegenden Schneidspitzen 28. So kann die zu nutzende Schneidspitze 28 durch Drehen und/oder Wenden des gesamten Schneidelements 27 um bevorzugt 180 Grad, beispielsweise bei Verschleiß der einen Schneidspitze 28, gewechselt werden.

Die beiden Schneidspitzen 28 sind gemäß dem dargestellten Ausführungsbeispiel bezüglich ihrer Schneidenkontur gleich ausgebildet, mit einer in Schneidrichtung s gerichteten Steilflanke 61 und einer hieran anschließenden Flachflanke 62. Diese Art der Ausbildung der Schneidspitze 28 erweist sich als günstig, insbesondere zum Schneiden von Kunststoffrohren, wie weiter beispielsweise Hauswasser-Rohren, wobei weiter die gewählte Schneidspitzen-Gestaltung die Räumung der sich ergebenden Schneidfuge begünstigt.

Alternativ kann das Schneidelement 27 auch gegenüberliegend mit unterschiedlich gestalteten Schneiden ausgebildet sein, beispielsweise zum Schneiden von Rohrstücken 2 aus unterschiedlichen Werkstoffen.

Das Schneidelement 27 kann, wie auch bevorzugt, steckgehaltert sein in einem Verschiebeteil 29. Hierzu weist das Verschiebeteil 29 im Bereich des der C-Öffnung 12 zugewandten Endes eine Aufnahme 30 auf, in welcher das Schneidelement 27 über eine Steckachse 31 halterbar ist. Die geometrische Achse dieser Steckachse 31 erstreckt sich bevorzugt gleichgerichtet zu den geometrischen Achsen der Rollen 18 sowie der Wippenachsen 21.

Das Schneidelement 27 ist hinsichtlich dessen Längserstreckung bevorzugt mittig im Bereich einer Halterungsöffnung 32 von der Steckachse 31 durchsetzt. Dabei stützt sich das Schneidelement 27 weiter bevorzugt entlang dessen Längsrandkanten 33 an den zugewandten Wandungen der Aufnahme 30 ab, sodass das Schneidelement 27 bevorzugt formschlüssig in der Aufnahme 30 gehaltert ist.

Die Steckachse 31 ist im Bereich eines Endes mit einem Radialkragen 34 versehen, der in der Halterungsstellung des Schneidelements 27 in der Aufnahme 30 in einer zugeordneten und angepassten Einsenkung 35 des Verschiebeteils 29 aufgenommen ist. Dabei kann der Radialkragen 34 beispielsweise als Mehrkant, weiter beispielsweise als Sechskant ausgebildet sein, gegebenenfalls zur drehsicheren Halterung in der weiter gegebenenfalls formangepassten Einsenkung 35.

Das dem Radialkragen 34 abgewandte freie Ende der Steckachse 31 ist gegenüber dem insbesondere das Schneidelement 27 durchsetzenden Abschnitt durchmesserverringert und ragt im Bereich eines Freischnitts 36 des Verschiebeteils 29 frei zur Betätigung vor.

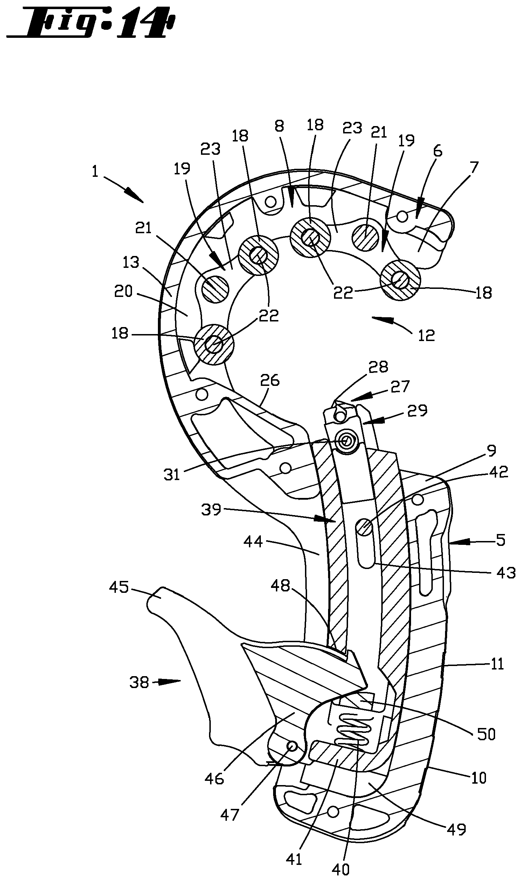

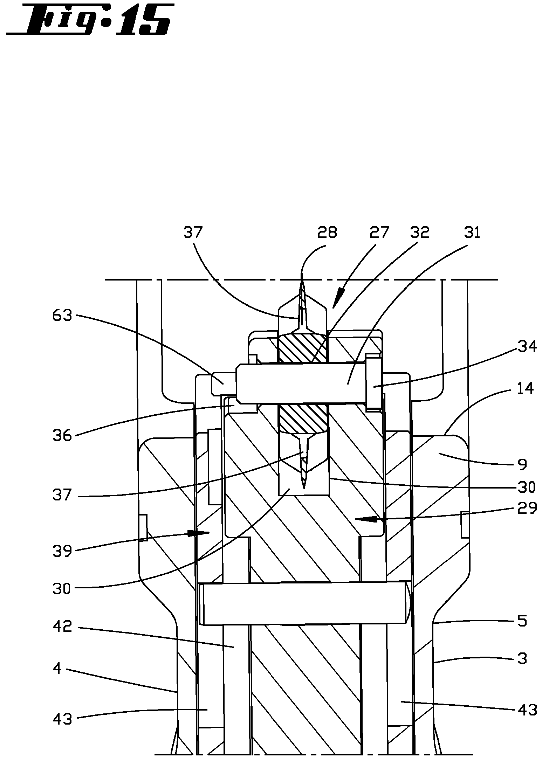

So kann weiter beispielsweise lediglich durch Druckausübung in Achsrichtung der Steckachse 31 diese zur Freigabe des Schneidelements 27 verlagert werden. Dies ist insbesondere möglich in einer willensbetont herbeigeführten Vorstandslage des Verschiebeteils 29 gemäß den Darstellungen in den Figuren 14 und 15, in welcher Vorstandslage die Steckachse 31 in der C-Öffnung 12 zur Betätigung freiliegt. Diese Vorstandslage des Verschiebeteils 29 ist durch Betätigung eines auf das Verschiebeteil 29 einwirkenden Einzugshebels 38 erreichbar.

Nach Verlagerung der Steckachse 31 in eine das Schneidelement 27 freigebende Stellung, beziehungsweise nach Entnahme der Steckachse 31, kann das Schneidelement 27 aus der Aufnahme 30 entfernt werden. Zur besseren Entnahme ist das Schneidelement 27 weiter bevorzugt zwischen der Halterungsöffnung 32 und der jeweiligen Schneidspitze 28 mit einer bohrungsartigen Entnahmeöffnung 37 versehen, beispielsweise zum Einfädeln eines die Entnahme erleichternden Werkzeugs.

Als solches Werkzeug zur Entnahme des Schneidelements 27 aus der Aufnahme 30 kann gemäß einer möglichen Ausbildung die zuvor entnommene Steckachse 31 dienen, die an ihrem dem Radialkragen 34 abgewandten Ende eine Zapfenausbildung 63 aufweisen kann, die insbesondere hinsichtlich des gewählten Durchmessers an den Öffnungsdurchmesser der Entnahmeöffnung 37 angepasst ist. Das Schneiden-Entnahmewerkzeug ist somit in vorteilhafter Weise Teil des Rohrschneidegeräts 1 (vergleiche Figur 15).

Das Verschiebeteil 29 erstreckt sich in dem Fußteil 10 langgestreckt bogenförmig, weiter insbesondere innerhalb eines angepasst langgestreckt bogenförmig ausgebildeten Versetzungsteils 39. Dabei ist das Versetzungsteil 39 zunächst und im Wesentlichen rohrartig mit bevorzugt rechteckigem Querschnitt ausgebildet, zur führenden Aufnahme des Verschiebeteils 29. Letzteres ist entsprechend in Längserstreckung des Verschiebeteils 29, wie auch in Längserstreckung des Versetzungsteils 39 und des Fußteils 10, relativ zu dem Versetzungsteil 39 sowie dem Fußteil 10 entlang einer gekrümmt verlaufenden Bahn c verlagerbar. Durch die bevorzugt im Querschnitt unrunde Ausgestaltung des Hohlraums 49 des Versetzungsteils 39, wie auch des hierin aufgenommenen Verschiebeteils 29, ist eine drehfeste Verlagerung des Verschiebeteils 29 innerhalb des Versetzungsteils 39 erreicht.

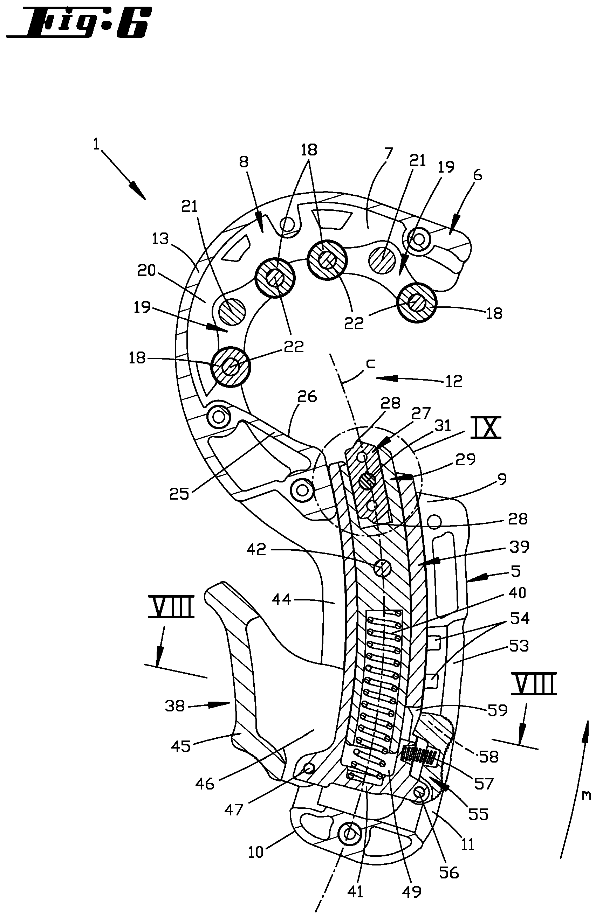

Das Verschiebeteil 29 stützt sich dabei weiter bevorzugt innerhalb des Versetzungsteils 39 über eine Druckfeder 40 auf einem Bodenabschnitt 41 des Versetzungsteils 39 ab, sodass das Verschiebeteil 29 zusammen mit dem in der Aufnahme 30 aufgenommenen Schneidelement 27 relativ zu dem Versetzungsteil 39 in eine Ausgangsstellung, beispielsweise gemäß Figur 6, belastet ist. In dieser Ausgangsstellung ragt das Schneidelement 27 mit der bereitgestellten Schneidspitze 28 frei in die C-Öffnung 12 ein.

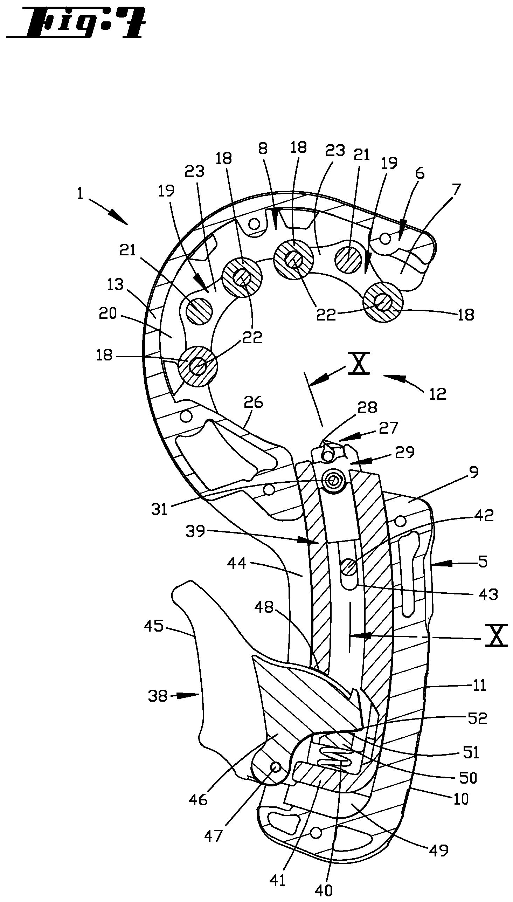

Die Relativverlagerbarkeit des Verschiebeteils 29 relativ zu dem Versetzungsteil 39 ist in beiden Richtungen bevorzugt begrenzt. Hierzu trägt das Verschiebeteil 29 in einem Bereich zwischen der Aufnahme 30 und dem Abstützungsbereich für die Druckfeder 40 einen sich bevorzugt in Achsrichtung der Rollen 18 erstreckenden und beidseitig über die Wandungsaußenfläche des Verschiebeteils 29 überstehenden Begrenzungsstift 42, welcher beidseitig endseitig in in den zugeordneten Wandungen des Versetzungsteils 39 ausgebildeten Langlöchern 43 eingreift (vergleiche beispielsweise Figur 7). Die Langlöcher 43 verlaufen entsprechend der Bahn c entlang einer gekrümmten Mittellinie.

Der vorerwähnte Einzugshebel 38 durchsetzt bevorzugt eine schlitzartige Durchbrechung 44 des Fußteils 10, welche Durchbrechung 44 bevorzugt auf der dem Öffnungsbereich des C-förmigen Arbeitskopfes 6 gegenüberliegenden Seite des Fußteils 10 vorgesehen ist.

Ausgehend von einem von außen zugänglichen Betätigungsabschnitt 45 durchsetzt der Einzughebel 38 die Durchbrechung 44 mit zwei bevorzugt in Erstreckungsrichtung der geometrischen Achsen der Rollen 18 zueinander beabstandeten und parallel verlaufenden Hebelschenkeln 46. Diese Hebelschenkel 46 sind über eine Achse 47 nahe dem Bodenabschnitt 41 an dem Versetzungsteil 39 angebunden, sodass hierdurch eine schwenkbare Anordnung des Einzughebels 38 insgesamt an dem und relativ zu dem Versetzungsteil 39 gegeben ist.

Die Hebelschenkel 46 durchsetzen über die Achse 47 hinausgreifend Schlitze 48 in der Wandung des Versetzungsteils 39, zum Eingriff in den das Verschiebeteil 29 führenden Hohlraum 49 des Versetzungsteils 39. Hierdurch kann eine günstige Führung des Einzugshebels 38 an dem Versetzungsteil 39 im Zuge einer Betätigung gegeben sein.

Das Verschiebeteil 29 weist darüber hinaus bevorzugt beidseitig wandungsaußenseitig, weiter bevorzugt zugeordnet dem der Aufnahme 30 abgewandten Ende, angeformte Steuernocken 50 auf, mit jeweils einer in Richtung auf das gegenüberliegende Ende weisenden bogenförmigen Betätigungsfläche 51. Diese Betätigungsflächen 51 sind ausgebildet zur Zusammenwirkung mit einer zugewandten Steuerfläche 52 der Hebelschenkel 46 des Einzughebels 38 (vergleiche beispielsweise Figur 7).

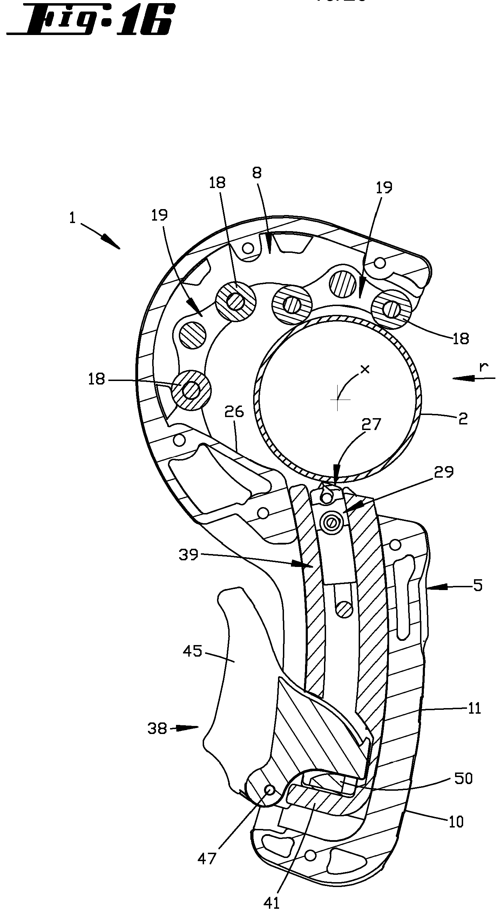

Entsprechend kann durch willensbetonte Schwenkverlagerung des Einzughebels 38 in Richtung auf das Fußteil 10 eine Verlagerung des Verschiebeteils 29 innerhalb des Versetzungsteils 39 in Richtung auf den versetzungsteilseitigen Bodenabschnitt 41 und entgegen der Rückstellkraft der Druckfeder 40 bewirkt werden, um so insbesondere das endseitig gehalterte Schneidelement 27 in den Hohlraum 49 des Versetzungsteils 39 zurückzuziehen. Das Schneidelement 27, insbesondere die zum Schneiden vorgesehene Schneidspitze 28, tritt somit bevorzugt nicht mehr über den Öffnungsrand des Versetzungsteils 39 in die C-Öffnung 12 ein. Diese rückverlagerte Stellung des Schneidelements 27 ist bevorzugt die Stellung des Rohrschneidegerätes 1, in welcher ein Rohrstück 2 in die C-Öffnung 12 eingeführt wird (vergleiche Figuren 16, 19 und 22).

Bevorzugt ist diese über entsprechende Betätigung des Einzughebels 38 herbeigeführte eingezogene Stellung des Verschiebeteils 29 zusammen mit dem Schneidelement 27 anschlagbegrenzt, insbesondere zufolge Anschlagen des Begrenzungsstiftes 42 an dem der C-Öffnung 12 abgewandten Endbereich des Langlochs 43.

Nach Aufhebung der auf den Einzughebel 38 einwirkenden Kraft, stellt sich das Verschiebeteil 29 zusammen mit dem Schneidelement 27 selbsttätig zufolge Entspannung der zuvor komprimierten Druckfeder 40 in die vorbeschriebene Ausgangsstellung, beispielsweise gemäß Figur 7, zurück.

Selbsttätig zufolge Entspannung der Druckfeder 40 oder durch eine mögliche Zugbetätigung des Einzughebels 38 entgegen der zuvor beschriebenen Betätigungsrichtung kann das Verschiebeteil 29 zusammen mit dem Schneidelement 27 in die vorbeschriebene Vorstandslage des Schneidelements 27 verbracht werden, in welcher die Steckachse 31 zum Schneidenwechsel freiliegt (vergleiche Figuren 14 und 15). Diese Stellung des Verschiebeteils 29 sowie des Schneidelements 27 kann darüber hinaus, wie auch bevorzugt, die anschlagbegrenzte Ausgangsstellung sein.

Wie beschrieben, ist das Verschiebeteil 29 entlang der gekrümmt verlaufenden Bahn c innerhalb des Versetzungsteils 39 verschiebbar. Ebenso über diese gekrümmt verlaufende Bahn c ist weiter das Versetzungsteil 39 - zusammen mit dem Verschiebeteil 29 - zur Anpassung der C-Öffnung 12 an unterschiedliche Durchmesser der zu schneidenden Rohrstücke 2 in einer Verstellrichtung m versetzbar. Bevorzugt wird diesbezüglich eine stufenweise Versetzung des Versetzungsteils 39. In dem dargestellten Ausführungsbeispiel sind in dem Zusammenhang drei Versetzungsstufen vorgesehen.

Bevorzugt gegenüberliegend zu der Durchbrechung 44 ist in dem Fußteil 10 weiter eine schlitzförmige Öffnung 53 vorgesehen. Im Bereich dessen Öffnungswandung sind gegenüberliegend und in Erstreckungsrichtung der Bahn c gleichmäßig zueinander distanziert taschenartige Rastaufnahmen 54 ausgebildet. Entsprechend der bevorzugt vorgesehenen drei Versetzungsstufen sind beidseitig in den Öffnungswandungen drei Rastaufnahmen 54 vorgesehen, die sich jeweils in Richtung auf den das Versetzungsteil 39 aufnehmenden Gehäuse-Hohlraum öffnen.

Gegenüberliegend zu dem Einzughebel 38 ist weiter an dem Versetzungsteil 39 ein tastenartiges Versetzungselement 55 schwenkbar angebunden. Dieses ist über eine Achse 56 ebenfalls im Bereich des Bodenabschnittes 41 des Versetzungsteils 39 schwenkbar gehaltert und erstreckt sich innerhalb der schlitzartigen Öffnung 53 des Fußteils 10.

Das Versetzungselement 55 stützt sich über eine Druckfeder 57 an dem Versetzungsteil 39 ab, ist entsprechend mit Bezug auf die Achse 56 nach radial außen gerichtet durch die Druckfeder 57 belastet.

Dass dem Anbindungsbereich im Bereich der Achse 56 gegenüberliegende Ende des Versetzungselements 55 ist, in Erstreckungsrichtung der Achse 56 betrachtet, beidseitig mit frei überstehenden Rastnocken 58 versehen, welche Rastnocken 58 bezüglich ihrer Erstreckungslänge und/oder Querschnittsgestaltung bevorzugt angepasst sind an die Öffnungsquerschnitte der Rastaufnahmen 54.

Zufolge einer gezielt ausgeübten Druckausübung auf das Versetzungselement 55 entgegen der Rückstellkraft der Druckfeder 57 und entsprechender Schwenkverlagerung des Versetzungselementes 55 um die Achse 56 werden die Rastnocken 58 aus dem Eingriff zu den gehäuseseitigen Rastaufnahmen 54 herausbewegt. Die Rastnocken 58 tauchen zusammen mit dem die Rastnocken 58 tragenden Abschnitt des Versetzungselementes 55 in eine entsprechend positionierte Ausnehmung 59 des Versetzungsteils 39 ein. In dieser Ausrückstellung des Versetzungselementes 55 ist eine Versetzung des Versetzungsteils 39 entlang der gekrümmt verlaufenden Bahn c ermöglicht. Sowohl das Versetzungselement 55 als auch der gegenüberliegende Einzughebel 38 verfahren dabei zusammen mit dem Versetzungsteil 39.

Die Raststellung zur Sicherung der neuen Versetzungsstellung des Versetzungsteils 39 zusammen mit dem Verschiebeteil 29 und dem Schneidelement 27 kann durch Aufhebung der Druckbeaufschlagung auf das Versetzungselement 55 im Wesentlichen selbsttätig herbeigeführt werden. So kann nach Aufhebung der Raststellung und Einleiten der Verlagerung des Versetzungsteils 39 die Druckausübung auf das Versetzungselement 55 aufgehoben werden, sodass mit Erreichen der nächsten Rastaufnahme 54 die Rastnocken 58 selbsttätig zufolge Entspannung der Druckfeder 57 in die Rastaufnahmen 54 einfallen können.

Beispielsweise wandungsaußenseitig an dem Versetzungsteil 39 können Markierungen 60 vorgesehen sein, die beispielsweise etwa in Überdeckung zu der Schenkelwandung 14 der C-Öffnung 12 die jeweils eingestellte Versetzungsstellung und somit weiter bevorzugt die Größe der Öffnung für ein zu schneidendes Rohrstück 2 anzeigen können.

Das beschriebene Rohrschneidegerät 1 dient beispielsweise zum Schneiden von Rohrstücken 2 in weiter beispielsweise drei verschiedenen Größen beziehungsweise Durchmessern.

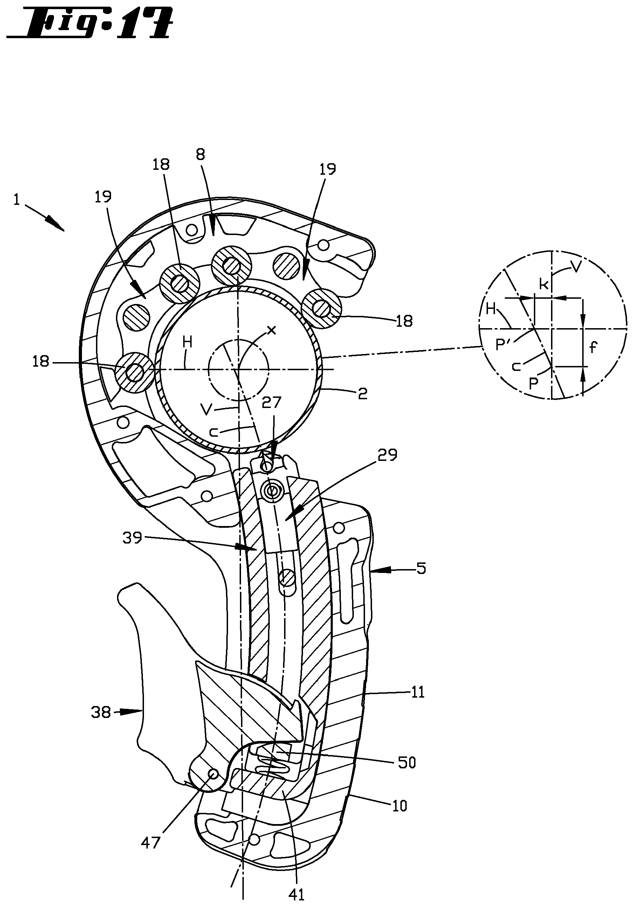

So kann eine erste Versetzungsstellung, in welcher das Versetzungsteil 39 nahezu vollständig in das Fußteil 10 eingezogen ist, zum Schneiden von Rohrstücken 20 mit einem beispielhaften Durchmesser von 50 mm dienen. Figur 16 zeigt in dieser ersten Versetzungsstellung eine Zwischenstellung im Zuge des Einführens des zu schneidenden Rohrstücks 2 i n die C-Öffnung 12. Zufolge des eingezogen Schneidelements 27 kann das Rohrstück 2 beschädigungsfrei in die C-Öffnung 12 eingeführt werden, in eine Schneid-Bereitschaftsstellung, wie diese in Figur 17 dargestellt ist. Das Rohrstück 2 stützt sich umfangsmäßig an den Rollen 18 beider Wippenteile 19 sowie an der Abstützfläche 26 des gehäuseseitigen Abstützbocks 25 ab. In dieser Stellung ist der Einzugshebel 38 bevorzugt unbelastet, sodass über das Verschiebeteil 29 das Schneidelement 27 bedingt durch die Entspannung der Druckfeder 40 an die Außenfläche des zu schneidenden Rohrstücks 2 herangeführt ist.

Die Positionierung des Rohrstückes 2, insbesondere die Positionierung der gewünschten Trennebene des Rohrstückes 2, ist auch durch die in den Rollen 18 vorgesehenen Rillen 24 erleichtert. Diese Rillen 24 erstrecken sich zusammen mit der Schneidspitze 28 des Schneidelements 27 bevorzugt in einer gemeinsamen, quer zur Ausrichtung der geometrischen Achsen der Rollen 18 gerichteten Schneidebene E.

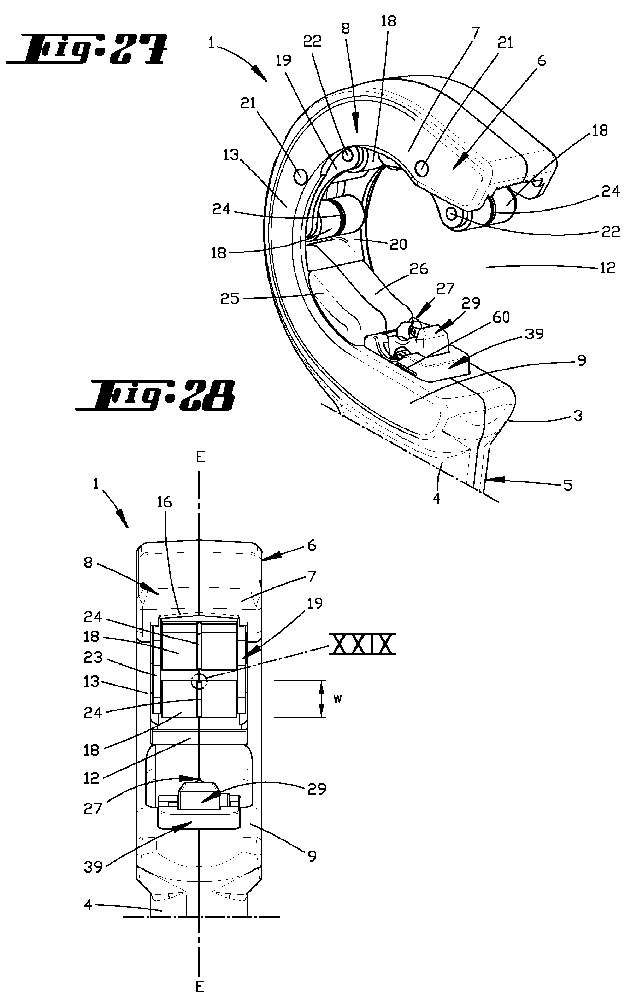

Jede Rille 24 kann, wie weiter anhand der in den Figuren 27 bis 29 dargestellt, in einem Längsschnitt durch die Rolle 18, in welchem Längsschnitt sich die geometrische Drehachse der Rolle 18 als Linie darstellt, in Art einer im Wesentlichen V-förmigen Einkerbung gegeben sein, die bevorzugt bezüglich der in Achsrichtung betrachteten Längserstreckung der Rolle 18 bevorzugt mittig ausgebildet ist.

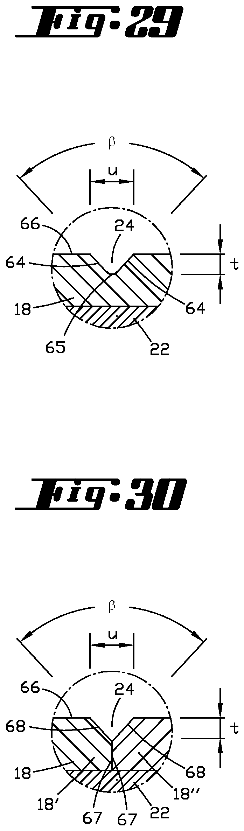

Dabei kann sich in der durch die Rille 24 unterbrochenen Rollenfläche 66 eine in dieser Längsrichtung betrachtete Rillenbreite u ergeben, die etwa einem Achtel bis einem Sechstel des äußeren Rollendurchmessers w entsprechen kann (vergleiche Figur 29). Darüber hinaus kann die senkrecht zu der Rollenbreite u betrachtete Rillentiefe t im Wesentlichen einem Vierundzwanzigstel bis hin zu einem Fünftel des äußeren Rollendurchmessers w entsprechen.

Darüber hinaus kann sich in dem Längsschnitt gemäß der Darstellung in Figur 29 bevorzugt eine V-Form der Rille 24 ergeben. So können weiter die die Rille 24 in dem Längsschnitt im Wesentlichen quer zu der Ausrichtung der Drehachse begrenzenden Rillenwandungen 64 einen Winkel β von bevorzugt mehr als 45 Grad bis hin zu beispielsweise 90 oder 120 Grad, weiter beispielsweise etwa 75 bis 105 Grad, zueinander einschließen. Entsprechend erstrecken sich diese Rillenwandungen 64 ausgehend von einer bevorzugt im Längsschnitt verrundeten Rillensohle 65 geneigt in Richtung zu dem Rollenaußenmantel, unter zunehmender Beabstandung der Rillenwandungen 64 zueinander.

Zufolge einer solchen Ausgestaltung der Rollen 18, mit zusammen mit der Schneidspitze 28 in einer gemeinsamen Schneidebene ausgerichteten Rillen 24, kann in einer oder mehreren Rillen 24 ein sich im Zuge des Schneidvorganges gegebenenfalls an dem Schneidgut - beispielsweise einem Kunststoff-Rohrstück 2 - einstellender Schneidspan aufgenommen werden. Der Schneidspan taucht quasi im Zuge des Schneidvorgangs durch die Rille 24 der führenden und abstützenden Rolle 18. Beidseitig der Rille 24 bleibt die Abstützung und Führung des Schneidguts - hier Rohrstück 2 - unbeeinflusst von dem sich etwaig einstellenden Schneidspan.

Figur 30 zeigt in einer weiteren Ausführungsform eine in Erstreckungsrichtung der Rollenachse 22 zweigeteilte Rolle 18, aufweisend ein erstes Rollenteil 18' und ein zweites Rollenteil 18". Beide Rollenteile 18' und 18" können, wie auch bevorzugt, gleich gestaltet sein, entsprechend gleiche Durchmesser und Längserstreckungsmaße aufweisend.

Im Bereich einer Stirnfläche 67 ist jedes Rollenteil 18' beziehungsweise 18" radial außen mit einer eine Fase bildenden Schrägfläche 68 versehen.

In einer üblichen Anordnung sind die Rollenteile 18' und 18" so auf der Rollenachse 22 angeordnet, dass die die Schrägflächen 68 aufweisenden Stirnflächen 67 einander zugewandt sind und bevorzugt, wie auch in Figur 30 dargestellt, aneinander anliegen. Dies kann gegebenenfalls durch ein jeweils axial außen auf das Rollenteil 18' und/ oder 18" einwirkendes Federelement unterstützt sein. Auch kann die Fassung beider Rollenteile 18' und 18" zwischen den Laschen 23 der Wippenteile 19 so gegeben sein, dass sich lediglich ein geringfügiges Axialspiel der Rollenteile auf der Rollenachse 22 im Hundertstel- bis Zehntel-Millimeterbereich ergibt.

Durch die aufeinander zugewandten Schrägflächen 68 ist die mittig umlaufende Rille 24 gebildet, wobei die Schrägflächen 68 die vorbeschriebenen Rillenwandungen 64 formen.

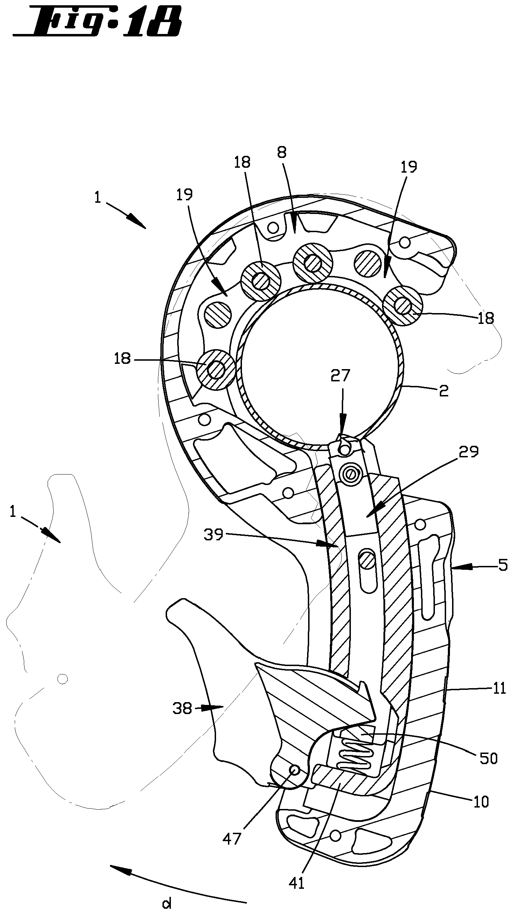

Das Fußteil 10 beziehungsweise der Griffbereich 11 wird auf der dem Einzugshebel 38 abgewandten Seite erfasst. Das Rohrschneidegerät 1 wird unter bevorzugter Zugbelastung dieses Griffabschnitts in Richtung d um das Rohrstück 2 gedreht (vergleiche Figur 18). Dabei ist durch die versenkte Anordnung des Versetzungselementes 55 eine nicht willensbetonte Betätigung des Versetzungselementes 55 im Zuge des Schneidvorgangs verhindert.

Zufolge der sich ergebenden Zugbewegung des Schneidelements 27 in Richtung d gräbt sich die Schneidspitze 28 unter Druckbelastung über die Druckfeder 40 in das Wandungsmaterial des Rohrstücks 2 ein, was abschließend zur vollständigen Durchtrennung des Rohrstücks 2 führt. Das Rohrstück 2 erfährt im Zuge des vollständigen Schneidvorgangs eine ausreichende und reibungsreduzierte Abstützung über die Rollen 18 sowie (in dieser Versetzungsstellung) über die Abstützfläche 26.

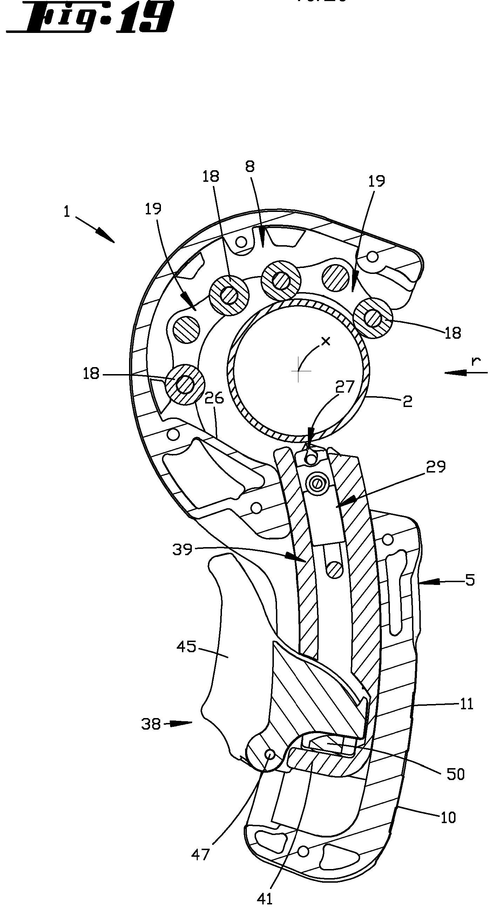

Die Figuren 19 bis 21 zeigen den vorbeschriebenen Schneidvorgang in einer zweiten (mittleren) Versetzungsstellung des Versetzungsteils 39 zum Schneiden von Rohrstücken 2 einer mittleren Größe, beispielsweise von Rohrstücken 2 mit einem Außendurchmesser von etwa 40 mm. Wie ersichtlich, ragt in der Ausgangsstellung das Versetzungsteil 39 zusammen mit dem aufgenommenen Verschiebeteil 29 und dem Schneidelement 27 weiter in die C-Öffnung 12 hinein als dies in der ersten Versetzungsstellung der Fall ist.

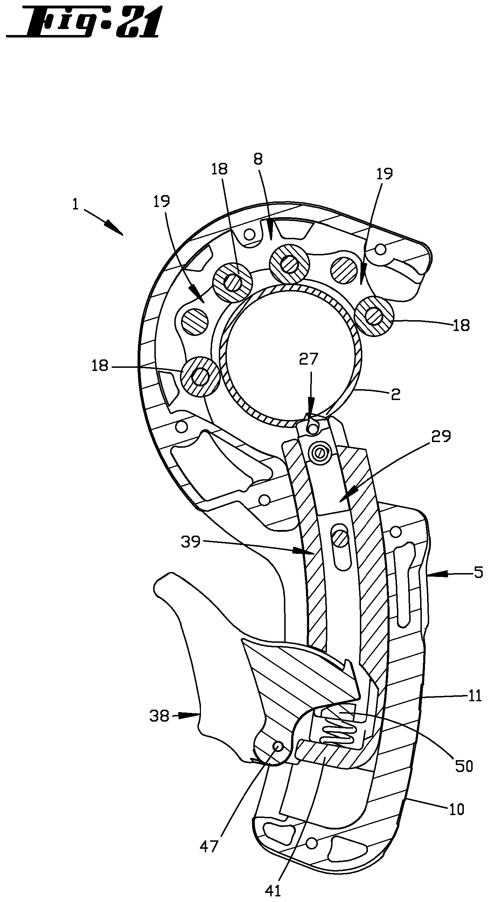

In der Schneid-Bereitschaftsstellung, wie auch im Zuge des Schneidvorganges gemäß Figur 21, kann sich eine umfangsmäßige Abstützung dieses Rohrstückes 2 allein an den Rollen 18 beider Wippenteile 19 ergeben.

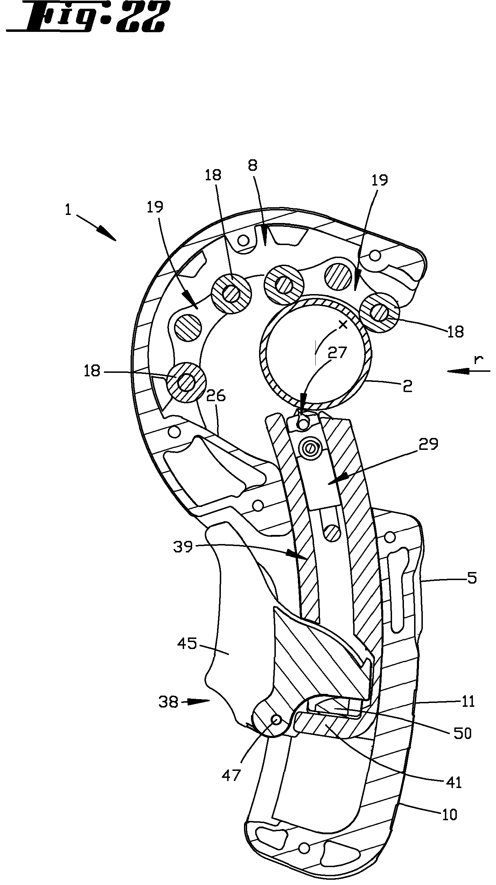

Die dritte Versetzungsstellung des Rohrschneidegerätes 1 zeigen die Figuren 22 bis 24, in welcher das Versetzungsteil 39 mit dem Verschiebeteil 29 und dem Schneidelement 27 noch weiter in die C-Öffnung 12 hineinragt. In dieser Versetzungsstellung können Rohrstücke 2 beispielsweise mit einem Außendurchmesser von 32 mm geschnitten werden, wobei in der Schneid-Bereitschaftsstellung und während des Schneidvorgangs ein solches Rohrstück 2 sich bevorzugt an drei in Umfangsrichtung aufeinanderfolgende Rollen 18 abstützen kann.

Wie in den Figuren 17, 20 und 23 dargestellt, ist die gekrümmt verlaufende Bahn c im Wesentlichen in Richtung auf die Rohrachse x des Rohrstücks 2 in der Schneid-Bereitschaftsstellung gerichtet. Dabei kann die Bahn c gegebenenfalls die Rohrachse x exakt schneiden oder auch mit einem geringfügigen Abstand dazu verlaufen.

In einer Ausrichtung des Rohrschneidegeräts 1, in welcher eine vertikal Symmetrieachse V des in dem Arbeitskopf 5 aufgenommenen Rohrstücks 2 in ihrer Verlängerung das Fußteil 10 durchsetzt und bei endseitigem Austritt aus dem Fußteil 10 die gekrümmt verlaufende Bahn c quert, schneidet die Bahn c die vertikale Symmetrieachse V innerhalb des Querschnitts des Rohrstücks 2 bevorzugt unterhalb der Rohrachse x und die horizontale Symmetrieachse H bevorzugt in Richtung auf den C-Steg 13 zu der Rohrachse x versetzt. Dabei kann sich ein vertikaler Abstand f zwischen der Rohrachse x und dem Schnittpunkt P der Bahn c mit der vertikalen Symmetrieachse V ergeben, der beispielsweise einem Fünftel oder weniger, weiter bevorzugt einem Zehntel oder weniger bis hin zu einem Zwanzigstel oder weniger des Außendurchmessers g des Rohrstücks 2 entsprechen kann. Der horizontale Abstand k zwischen dem Schnittpunkt P' der Bahn c mit der horizontalen Symmetrieachse H kann beispielsweise etwa dem 0,2- bis 1-Fachen, weiter beispielsweise etwa dem 0,5- bis 0,8-Fachen des Abstands f entsprechen.

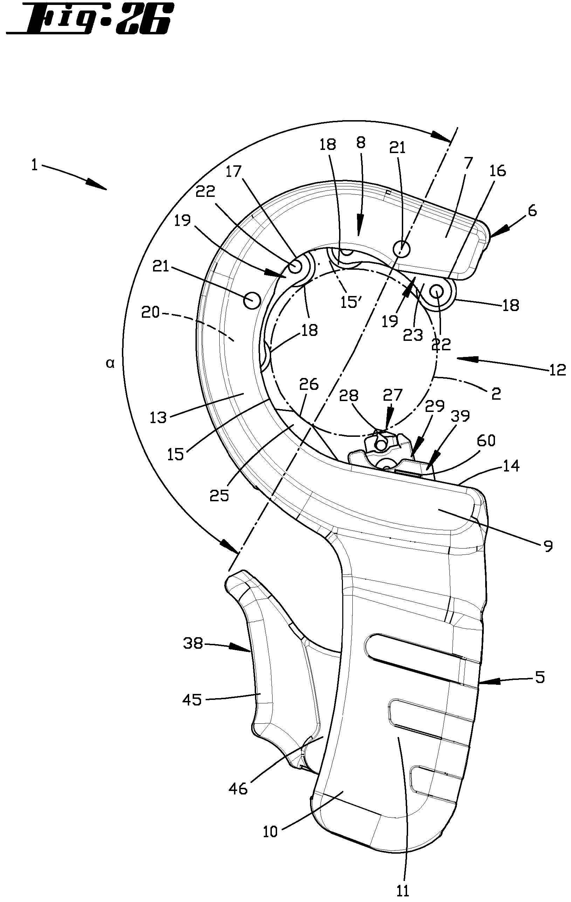

Selbst bei einem durchmessergroßen Rohrstück 2, beispielsweise einem Rohrstück 2 mit einem Durchmesser d von etwa 50mm, kann ein solcher Abstützwinkel α von weniger als 180 Grad erreicht sein, beispielsweise durch entsprechende Anpassung der Abstützfläche 26 des Abstützbocks 25. So ist in Figur 26 eine Ausführungsform des Rohrschneidegeräts 1 dargestellt, welche gegenüber der Ausführungsform gemäß Figur 2 eine in Umfangsrichtung verkürzte und gegebenenfalls in der Ansicht gemäß Figur 26 entlang einer Bogenlinie verlaufende Abstützfläche 26 aufweist. Hieraus ergibt sich bei Anordnung eines Rohrstücks 2 mit größtmöglichem Durchmesser d (hier beispielsweise 50 mm) eine Abstützung an der Abstützfläche 26 und den Wippenachsen 21 des Arbeitskopfes 6. Der dabei sich zwischen dem C-Steg 13 des Arbeitskopfes 6 abgewandten Wippenachse 21 des Wippenteils 19 und dem Abstützpunkt auf der Abstützfläche 16 ergebende Abstützwinkel α kann beispielsweise etwa 150 bis beispielsweise etwa 179 Grad, weiter beispielsweise etwa 175 Grad betragen. Einer unerwünschten Einspannung oder Klemmung des Rohrstücks 2 insbesondere im Zuge oder zum Abschluss eines Schneidvorganges ist zufolge des gewählten Abstützwinkels α von weniger als 180 Grad entgegengewirkt.

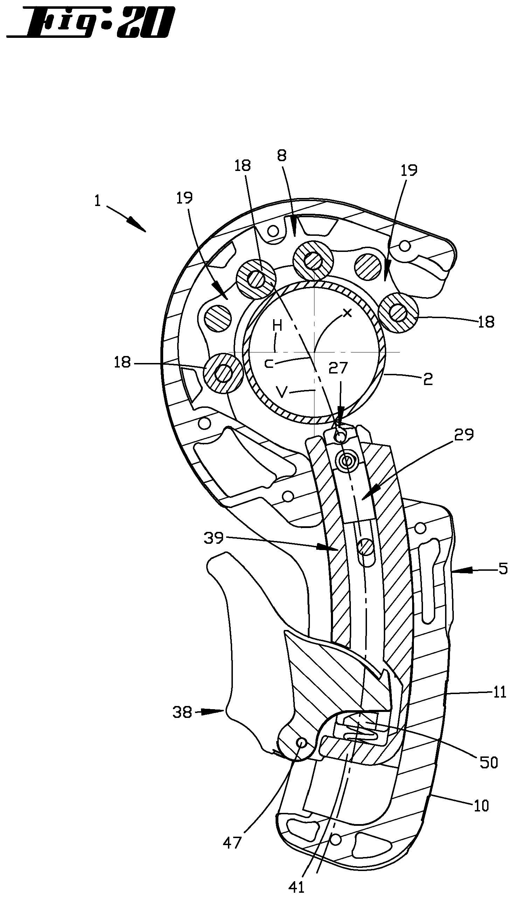

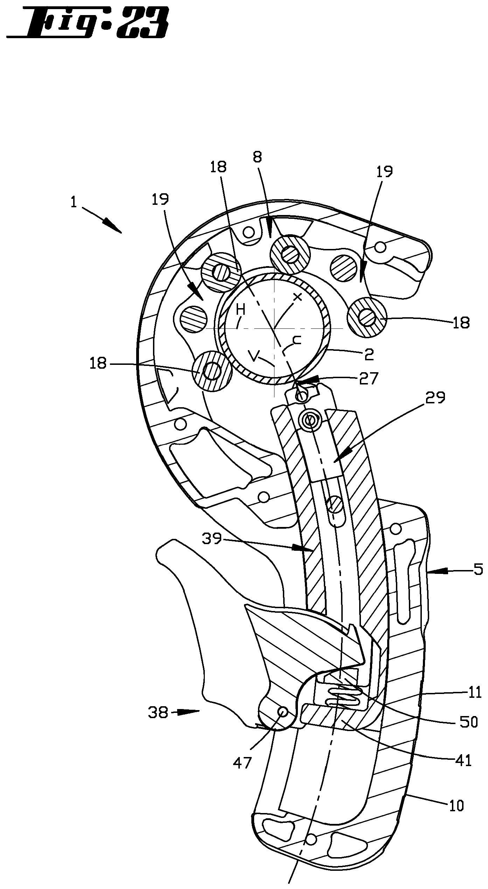

In der Schneid-Bereitschaftsstellung des jeweils zu schneidenden Rohrstücks 2 stützt sich das Rohrstück 2 unmittelbar oder mittelbar an dem Arbeitskopf 6 - bezogen auf die Rohrachse x - über einen Abstützwinkel α ab, der gemäß den Darstellungen in den Figuren 20 und 23 entsprechend (auch) bei kleinen und mittleren Rohrdurchmessern d, wie auch bevorzugt, kleiner als 180 Grad betragen kann, beispielsweise etwa 75 bis 150 Grad, weiter beispielsweise etwa 90 oder 135 Grad. Der vorbeschriebene Abstützwinkel α bezieht sich dabei bevorzugt auf die unmittelbaren Abstützpunkte im Arbeitskopf 6, so weiter bevorzugt auf die Abstützung des Rohrstücks 2 an dem Abstützbock 25 des Arbeitskopfes 6 und/oder auf die Abstützung an einer oder beiden Wippenachsen 21 (vergleiche Figur 26).

Selbst bei einem Abstützwinkel α von mehr als 180 Grad (beispielsweise etwa 190 Grad bei einem Rohrstück 2 gleichen Durchmessers d von etwa 50mm), wie sich dies gemäß der in Figur 2 dargestellten Ausführungsform ergibt, besteht nicht die Gefahr einer Klemmung des Rohrstücks 2 in dem Arbeitskopf 6, da die Rohrachse x und somit der Mittelpunkt des Rohres in der Schneid-Bereitschaftsstellung außerhalb (vor) der schalenartigen Abstützung liegt (siehe lotrechte Projektion der Rohrachse x entlang der Vertikalen V in Figur 17).

**Liste der Bezugszeichen**

| | | | |
|---|---|---|---|
| 1 | Rohrschneidegerät | 26 | Abstützfläche |
| 2 | Rohrstück | 27 | Schneidelement |
| 3 | Gehäuseschale | 28 | Schneidspitze |
| 4 | Gehäuseschale | 29 | Verschiebeteil |
| 5 | Gehäuse | 30 | Aufnahme |
| 6 | Arbeitskopf | 31 | Steckachse |
| 7 | C-Schenkel | 32 | Halterungsöffnung |
| 8 | Gegenhalter | 33 | Langrandkante |
| 9 | C-Schenkel | 34 | Radialkragen |
| 10 | Fußteil | 35 | Einsenkung |
| 11 | Griffbereich | 36 | Freischnitt |
| 12 | C-Öffnung | 37 | Entnahmeöffnung |
| 13 | C-Steg | 38 | Einzugshebel |
| 14 | Schenkelwandung | 39 | Versetzungsteil |
| 15 | Stegwandungs-Abschnitt | 40 | Druckfeder |
| 15' | Verlängerung | 41 | Bodenabschnitt |
| 16 | Schenkelwandung | 42 | Begrenzungsstift |
| 17 | Stegwandungs-Abschnitt | 43 | Langloch |
| 18 | Rolle | 44 | Durchbrechung |
| 18' | Rollenteil | 45 | Betätigungsabschnitt |
| 18" | Rollenteil | 46 | Hebelschenkel |
| 19 | Wippenteil | 47 | Achse |
| 20 | Gehäusevertiefung | 48 | Schlitz |
| 21 | Wippenachse | 49 | Hohlraum |
| 22 | Rollenachse | 50 | Steuernocken |
| 23 | Lasche | 51 | Betätigungsfläche |
| 24 | Rille | 52 | Steuerfläche |
| 25 | Abstützbock | 53 | Öffnung |
| 54 | Rastaufnahme | w | Rollendurchmesser |
| 55 | Versetzungselement | x | Rohrachse |
| 56 | Achse | E H | Schneidebene |
| 57 | Druckfeder | | horizontale Symmetrieachse |
| 58 | Rastnocken | P | Schnittpunkt |
| 59 | Ausnehmung | P' | Schnittpunkt |
| 60 | Markierung | V | vertikale Symmetrieachse |
| 61 | Steilflanke | | |
| 62 | Flachflanke | α | Abstützwinkel |
| 63 | Zapfenausbildung | β | Rillenöffnungswinkel |
| 64 | Rillenwandung | | |
| 65 | Rillensohle | | |
| 66 | Rollenfläche | | |
| 67 | Stirnfläche | | |
| 68 | Schrägfläche | | |
| a | Erweiterungsmaß | | |
| b | Abstandsmaß | | |
| c | Bahn | | |
| d | Richtung | | |
| f | Abstand | | |
| g | Durchmesser | | |
| k | Abstand | | |
| m | Verstellrichtung | | |
| r | Einführrichtung | | |
| s | Schneidrichtung | | |
| t | Rillentiefe | | |
| u | Rillenbreite | | |

## Patentansprüche

1. Rohrschneidegerät (1) mit einem Versetzungsteil (39) und einem Gegenhalter (8), die an einem C-förmigen Arbeitskopf (6) ausgebildet sind, wobei der Arbeitskopf (6) in ein auch als Griffbereich (11) nutzbares Fußteil (10) übergeht, das Versetzungsteil (39) relativ zu dem Fußteil (10) zur Veränderung einer Öffnungsweite des Arbeitskopfes (6) versetzbar ist und das Versetzungsteil (39) ein Schneidelement (27) aufweist, **dadurch gekennzeichnet, dass** das Versetzungsteil (39) auf einer gekrümmt verlaufenden Bahn (c) versetzbar ist.

2. Rohrschneidegerät (1) nach Anspruch 1, **dadurch gekennzeichnet, dass** ein Versetzungselement (55) des Versetzungsteils (39) in dem Griffbereich (11) versenkt angeordnet ist.

3. Rohrschneidegerät (1) nach einem der vorhergehenden Ansprüche, **dadurch gekennzeichnet, dass** das Schneidelement (27) in einem Verschiebeteil (29) aufgenommen ist und das Verschiebeteil (29) mit dem Schneidelement (27) in dem Versetzungsteil (39) bewegbar angeordnet ist.

4. Rohrschneidegerät nach Anspruch 3, **dadurch gekennzeichnet, dass** das Verschiebeteil (29) mit dem Schneidelement (27) in dem Versetzungsteil (39) gegen Federkraft bewegbar angeordnet ist.

5. Rohrschneidegerät (1) nach einem der vorhergehenden Ansprüche, **dadurch gekennzeichnet, dass** der Gegenhalter (8) Rollen (18) aufweist und dass jeweils zwei Rollen (18) paarweise an einem Wippenteil angeordnet sind.

6. Rohrschneidegerät (1) nach Anspruch 5, **dadurch gekennzeichnet, dass** zwei Paare von Rollen (18) vorgesehen sind.

7. Rohrschneidegerät (1) nach einem der Ansprüche 2 bis 6, **dadurch gekennzeichnet, dass** das Versetzungselement (55) zusammen mit dem Versetzungsteil (39) verfahrbar angeordnet ist.

8. Rohrschneidegerät (1) nach einem der vorhergehenden Ansprüche, **dadurch gekennzeichnet, dass** ein Einzugshebel (38) vorgesehen ist, mit welchem das Schneidelement (27) aus der C-Öffnung (12) herausbewegbar ist, wobei bevorzugt der Einzugshebel (38) zusammen mit dem Versetzungsteil (39) verfahrbar angeordnet ist.

9. Rohrschneidegerät (1) nach Anspruch 8, **dadurch gekennzeichnet, dass** an dem Verschiebeteil (29) eine Betätigungsfläche (51) ausgebildet ist, die durch den Einzugshebel (38) beaufschlagbar ist.

10. Rohrschneidegerät (1) nach Anspruch 9, **dadurch gekennzeichnet, dass** die Betätigungsfläche (51) als Steuernocken (50) wirkt, der mit Entspannung der Feder (40) das Verschiebeteil (29) mit dem Schneidelement (27) in eine Ausgangsstellung zurück bewegt.

11. Rohrschneidegerät (1) nach einem der Ansprüche 8 bis 10, **dadurch gekennzeichnet, dass** der Einzugshebel (38) mit zwei zueinander distanzierten Hebelschenkeln (46) auf jeweils eine Betätigungsfläche (51) einwirken kann, wobei bevorzugt der Einzugshebel (38) an dem Versetzungsteil (39) anscharniert ist.

12. Rohrschneidegerät (1) nach Anspruch 11, **dadurch gekennzeichnet, dass** ein Hebelschenkel (46) einen Schlitz (48) des Versetzungsteils (39) durchsetzt.

13. Rohrschneidegerät (1) nach einem der Ansprüche 3 bis 12, **dadurch gekennzeichnet, dass** das Verschiebeteil (29) in Verstellrichtung (m) des Versetzungsteils (39) gekrümmt verlaufend gestaltet ist.

14. Rohrschneidegerät (1) nach einem der vorhergehenden Ansprüche, **dadurch gekennzeichnet, dass** das Schneidelement (27) durch eine Steckachse (31) gehaltert ist, die lediglich durch Druckausübung in Achsrichtung der Steckachse (31) entfernbar ist.

15. Rohrschneidegerät (1) nach einem der Ansprüche 3 bis 14, **dadurch gekennzeichnet, dass** das Schneidelement (27) in dem Verschiebeteil (29) um 180 Grad versetzbar aufgenommen ist.

## Claims

1. A pipe cutting device (1) with an offset part (39) and a counter-holder (8), which are formed on a C-shaped working head (6), wherein the working head (6) furthermore transforms into a foot part (10), which can also be used as a handle area (11), and the offset part (39) can be offset relative to the foot part (10) in order to change an opening width of the working head (6), and wherein the offset part (39) comprises a cutting element (27), **characterized in that** the offset part (39) can be offset along a curved path (c).

2. The pipe cutting device (1) according to claim 1, **characterized in that** an offset element (55) of the offset part (39) is arranged in the handle area (11) in a recessed manner.

3. The pipe cutting device (1) according to one of the preceding claims, **characterized in that** the cutting element (27) is accommodated in a displacement part (29) and the displacement part (29) with the cutting element (27) is movably arranged in the offset part (39).

4. The pipe cutting device according to claim 3, **characterized in that** the displacement part (29) with the cutting element (27) is arranged in the offset part (39) so as to be movable against a spring force.

5. The pipe cutting device (1) according to one of the preceding claims, **characterized in that** the counter-holder (8) has rollers (18) and that two rollers (18) respectively are arranged in pairs on a rocker part (19).

6. The pipe cutting device (1) according claim 5, **characterized in that** two pairs of rollers (18) are provided.

7. The pipe cutting device (1) according to one of the claims 2 to 6, **characterized in that** the offset element (55) is arranged so as to be displaceable together with the offset part (39).

8. The pipe cutting device (1) according to one of the preceding claims, **characterized in that** a retraction lever (38) is provided, by means of which the cutting element (27) can be moved out of the C-opening (12), wherein the retraction lever (38) preferably is arranged so as to be displaceable together with the offset part (39).

9. The pipe cutting device (1) according to claim 8, **characterized in that** an actuating surface (51), which can be acted upon by the retraction lever (38), is formed on the displacement part (29).

10. The pipe cutting device (1) according to claim 9, **characterized in that** the actuating surface (51) acts as a control cam (50) that moves the displacement part (29) with the cutting element (27) back into a starting position as the spring (40) relaxes.

11. The pipe cutting device (1) according to one of the claims 8 to 10, **characterized in that** the retraction lever (38) can respectively act upon an actuating surface (51) with two lever limbs (46) that are spaced apart from one another, wherein the retraction lever (38) preferably is hinged on the offset part (39).

12. The pipe cutting device (1) according to claim 11, **characterized in that** a lever limb (46) passes through a slot (48) of the offset part (39).

13. The pipe cutting device (1) according to one of the claims 3 to 12, **characterized in that** the displacement part (29) is designed so as to extend in a curved manner in the adjusting direction (m) of the offset part (39).

14. The pipe cutting device (1) according to one of the preceding claims, **characterized in that** the cutting element (27) is held by a linchpin (31), which can only be removed by exerting pressure in the axial direction of the linchpin (31).

15. The pipe cutting device (1) according to one of the claims 3 to 14, **characterized in that** the cutting element (27) is accommodated in the displacement part (29) so as to be rotatable by 180 degrees.

## Revendications

1. Appareil de coupe de tubes (1) avec une pièce de déplacement (39) et un contre-support (8), qui sont formés sur une tête de travail (6) en forme de C, la tête de travail (6) se transformant en une partie de pied (10) utilisable également comme zone de préhension (11), la partie de déplacement (39) peut être déplacée par rapport à la partie de pied (10) pour modifier une largeur d'ouverture de la tête de travail (6) et la partie de déplacement (39) présente un élément de coupe (27), **caractérisé en ce que** la partie de déplacement (39) peut être déplacée sur une trajectoire (c) s'étendant de manière incurvée.

2. Appareil de coupe de tubes (1) selon la revendication 1, **caractérisé en ce qu'**un élément de déplacement (55) de la partie de déplacement (39) est disposé de manière encastrée dans la zone de poignée (11).

3. Appareil de coupe de tubes (1) selon l'une des revendications précédentes, **caractérisé en ce que** l'élément de coupe (27) est reçu dans une pièce de déplacement (29) et la pièce de déplacement (29) est disposée de manière mobile avec l'élément de coupe (27) dans la pièce de déplacement (39).

4. Appareil de coupe de tubes selon la revendication 3, **caractérisé en ce que** la pièce de déplacement (29) avec l'élément de coupe (27) est disposée de manière mobile dans la pièce de déplacement (39) contre la force d'un ressort.

5. Appareil de coupe de tubes (1) selon l'une des revendications précédentes, **caractérisé en ce que** le contre-support (8) présente des galets (18) et **en ce que** deux galets (18) sont respectivement disposés par paires sur une partie basculante.

6. Appareil de coupe de tubes (1) selon la revendication 5, **caractérisé en ce que** deux paires de rouleaux (18) sont prévues.

7. Appareil de coupe de tubes (1) selon l'une quelconque des revendications 2 à 6, **caractérisé en ce que** l'élément de déplacement (55) est disposé de manière à pouvoir être déplacé conjointement avec la partie de déplacement (39).

8. Appareil de coupe de tubes (1) selon l'une des revendications précédentes, **caractérisé en ce qu'**il est prévu un levier de rétraction (38) avec lequel l'élément de coupe (27) peut être sorti de l'ouverture C (12), le levier de rétraction (38) étant de préférence disposé de manière à pouvoir être déplacé conjointement avec la pièce de décalage (39).

9. Appareil de coupe de tubes (1) selon la revendication 8, **caractérisé en ce qu'**une surface d'actionnement (51) est formée sur la partie coulissante (29), laquelle peut être sollicitée par le levier d'introduction (38).

10. Appareil de coupe de tubes (1) selon la revendication 9, **caractérisé en ce que** la surface d'actionnement (51) agit comme une came de commande (50) qui, avec la détente du ressort (40), ramène la pièce coulissante (29) avec l'élément de coupe (27) dans une position initiale.

11. Appareil de coupe de tubes (1) selon l'une des revendications 8 à 10, **caractérisé en ce que** le levier de rétraction (38) peut agir avec deux branches de levier (46) espacées l'une de l'autre sur une surface d'actionnement (51) respective, le levier de rétraction (38) étant de préférence articulé sur la pièce de décalage (39).

12. Appareil de coupe de tubes (1) selon la revendication 11, **caractérisé en ce qu'**une branche de levier (46) traverse une fente (48) de la partie de déplacement (39).

13. Appareil de coupe de tubes (1) selon l'une quelconque des revendications 3 à 13, **caractérisé en ce que** la pièce de déplacement (29) est configurée de manière à s'étendre de manière incurvée dans la direction de déplacement (m) de la pièce de déplacement (39).

14. Appareil de coupe de tubes (1) selon l'une des revendications précédentes, **caractérisé en ce que** l'élément de coupe (27) est maintenu par un axe d'emboîtement (31) qui peut être retiré uniquement en exerçant une pression dans la direction axiale de l'axe d'emboîtement (31).

15. Appareil de coupe de tubes (1) selon l'une des revendications 3 à 14, **caractérisé en ce que** l'élément de coupe (27) est logé dans la partie coulissante (29) de manière à pouvoir être déplacé de 180 degrés.
